# EUROPEAN PATENT APPLICATION

(11) **EP 4 102 773 A1**
(43) Date of publication of application: **14.12.2022**
(21) Application number: 20923634.8
(22) Date of filing: 06.03.2020
(51) Int. Cl.: H04L 12/24

(54) **INFORMATION PROCESSING METHOD AND COMMUNICATION APPARATUS**

(71) Applicant: Huawei Technologies Co., Ltd., Shenzhen, Guangdong 518129, (CN)
(72) Inventor: YANG, Shuigen, Shenzhen, Guangdong 518129, (CN); HAN, Feng, Shenzhen, Guangdong 518129, (CN); TAN, Wei, Shenzhen, Guangdong 518129, (CN)
(74) Representative: MERH-IP Matias Erny Reichl Hoffmann Patentanwälte PartG mbB
(86) International application number: PCT/CN2020/078310
(87) International publication number: WO 2021/174555

(57) **Abstract**

This application discloses an information processing method and a communication apparatus. The information processing method includes: A first access network device sends application layer measurement configuration information to a terminal, and the first access network device receives an application layer measurement report from the terminal. The application layer measurement configuration information includes identification information. The identification information indicates a network slice. The application layer measurement report includes an application layer measurement result of the network slice. The terminal can perform, by using the method, quality of experience measurement collection on a plurality of services with less signaling interaction.

## Description

### TECHNICAL FIELD

This application relates to the field of network optimization technologies, and in particular, to an information processing method and a communication apparatus.

### BACKGROUND

Quality of experience (quality of experience, QoE) refers to subjective experience of a user on quality and performance of a network, a service, or the like. A QoE requirement is related to a terminal, and is also related to a service. Different terminals may correspond to different QoE requirements, and different services may correspond to different QoE requirements. A carrier provides various services for a terminal user, and tries to meet a QoE requirement of the user.

To meet the QoE requirement of the user as much as possible, the carrier may collect QoE measurement data, for example, data such as a frame rate and jitter duration of a service run by the terminal, and reallocate a resource to the terminal or the service based on the measurement data, to achieve an objective of network optimization. Currently, a procedure for the carrier to collect QoE measurement data is as follows. A network side sends application layer measurement configuration information to a terminal. The application layer measurement configuration information includes a specific service type. The terminal performs QoE measurement collection on a service corresponding to the application layer measurement configuration information, and sends a measurement result to the network side. The network side can indicate the terminal to perform application layer measurement on only one service at a time.

Currently, the terminal supports a streaming service and a multimedia telephony service for IP multimedia subsystem (multimedia telephony service for IP multimedia subsystem, MTSI). A network slice (network slice) is introduced into 5G. One physical network may be abstracted into a plurality of network slices. Each network slice may flexibly provide one or more services based on a requirement of a demander. A network system into which the network slice is introduced may support a plurality of serving types, for example, enhanced mobile broadband (enhanced mobile broadband, eMBB), ultra-reliable low-latency communication (ultra-reliable low-latency communication, URLLC), Massive Internet of Things (massive Internet of things, MIoT), and vehicle to everything (vehicle to everything, V2X). It may be learned that in an application scenario in which the network slice is introduced, if a current procedure of collecting QoE measurement data is still used, the network side needs to send the application layer measurement configuration information for a plurality of times. Consequently, overheads are large.

### SUMMARY

This application provides an information processing method and a communication apparatus, to enable a terminal to perform QoE measurement collection on a plurality of service types with less signaling interaction.

According to a first aspect, an information processing method is provided. The method may be performed by a first communication apparatus. The first communication apparatus may be a communication device or a communication apparatus that can support the communication device in implementing functions required for the method, for example, a chip system. An example in which the communication device is a first access network device is used below for descriptions. The method includes:

The first access network device sends application layer measurement configuration information to a terminal. The application layer measurement configuration information includes identification information. The identification information indicates a network slice.

The first access network device receives an application layer measurement report from the terminal. The application layer measurement report includes an application layer measurement result of the network slice.

In this embodiment of this application, the application layer measurement configuration information sent by a network side to the terminal may include the identification information indicating the network slice, that is, network slice information that can be used by the network side to indicate the terminal to perform application layer measurement. Because one network slice may be associated with a plurality of service types of the terminal, for example, a network slice of a V2X serving type may be associated with a streaming service and an MTSI service, in this method, the network side needs to send the application layer measurement configuration information only once, so that the terminal can perform application layer measurement on a plurality of services, that is, perform quality of experience measurement collection. This may reduce a quantity of times of information exchange between the network side and the terminal, and reduce overheads.

In a possible implementation, the identification information includes single network slice selection assistance information (single network slice selection assistance information) S-NSSAI.

In a possible implementation, the application layer measurement configuration information further includes a service type. The application layer measurement configuration information indicates to perform quality of experience measurement collection on the service type in the network slice.

It should be understood that serving types may include a URLLC type, a MIoT type, an eMBB type, a V2X type, and the like that are supported by the network slice. Each serving type may support at least one service type. When one network slice supports a plurality of service types, or one service type is implemented by using a plurality of network slices, an application layer measurement report of a service type in a network slice may be obtained by using the method, to optimize the network slice.

In a possible implementation, the method further includes: The first access network device receives a first message from a network device. The first message includes the application layer measurement configuration information. In some scenarios, the first access network device does not know whether the terminal is indicated to perform quality of experience measurement collection on the network slice or the service type in the network slice, but another network device knows. Therefore, the first access network device may send the application layer measurement configuration information to the terminal under triggering of the another network device, so that the first access network device optimizes the network slice based on a result of performing application layer measurement by the terminal on the network slice or the service type in the network slice.

In a possible implementation, the method further includes: The first access network device receives capability information from the terminal. The capability information indicates that the terminal supports application layer measurement collection, for example, quality of experience measurement collection, of the network slice. In this solution, the terminal actively sends the capability information to the first access network device. This may avoid, as much as possible, a resource waste caused because the first access network device sends, to a terminal that does not support application layer measurement collection on the network slice, the application layer measurement configuration information that carries the identification information of the network slice.

In a possible implementation, before the first access network device receives capability information from the terminal, the method further includes:

The first access network device sends a second message to the terminal. The second message is used to request to obtain the capability information of the terminal. In this solution, the terminal sends the capability information to the first access network device based on a requirement of the first access network device, to further reduce information exchange between the network side and the terminal side, and reduce signaling overheads.

In a possible implementation, the method further includes:

The first access network device sends capability information of the terminal to the network device. The capability information indicates that the terminal supports quality of experience measurement collection on the network slice. In this solution, the first access network device actively sends the capability information to the network device. This may avoid, as much as possible, a resource waste caused because the network device obtains the application layer measurement result of the network slice from the terminal that does not support quality of experience measurement collection on the network slice.

In a possible implementation, before the first access network device sends capability information of the terminal to the network device, the method further includes:

The first access network device receives a third message from the network device. The third message is used to request to obtain the capability information of the terminal. In this solution, the first access network device sends the capability information to the network device based on a requirement of the network device. This may avoid a resource waste caused because the first access network device sends the capability information to the network device for a large quantity of times.

The solutions provided in this embodiment of this application may be applied to a separate first access network device. In a possible implementation, the first access network device includes a central unit (central unit, CU) and a distributed unit (distributed unit, DU). That the first access network device sends application layer measurement configuration information to a terminal includes:

The CU in the first access network device sends the application layer measurement configuration information to the terminal.

In a possible implementation, the first access network device includes the CU and the DU. That the first access network device receives an application layer measurement report from the terminal includes:

The CU in the first access network device receives the application layer measurement report from the terminal.

In a possible implementation, the method further includes:

The CU in the first access network device sends the application layer measurement report of the terminal to the DU in the first access network device.

In another possible implementation, the CU includes a CU control plane (CU-CP) and a CU user plane (CU-UP). That the first access network device sends application layer measurement configuration information to a terminal includes:

The CU-CP in the first access network device sends the application layer measurement configuration information to the terminal.

That the first access network device receives an application layer measurement report from the terminal includes:

The CU-CP in the first access network device receives the application layer measurement report from the terminal, and sends the application layer measurement report of the terminal to the DU in the first access network device.

According to a second aspect, an information processing method is provided. The method may be performed by a second communication apparatus. The second communication apparatus may be a communication device or a communication apparatus that can support the communication device in implementing functions required for the method, for example, a chip system. An example in which the communication device is a terminal is used below for descriptions. The method includes:

The terminal receives application layer measurement configuration information from a first access network device. The application layer measurement configuration information includes identification information. The identification information indicates a network slice.

The terminal sends an application layer measurement report to the first access network device. The application layer measurement report includes an application layer measurement result of the network slice.

In a possible implementation, the identification information includes S-NSSAI.

In a possible implementation, the application layer measurement configuration information further includes a service type. The application layer measurement configuration information indicates to perform quality of experience measurement collection on the service type in the network slice.

In a possible implementation, the method further includes:

The terminal sends capability information to the first access network device. The capability information indicates that the terminal supports application layer measurement collection, for example, quality of experience measurement collection, of the network slice.

In a possible implementation, before the terminal sends capability information to the first access network device, the method further includes:

The terminal receives a second message from the first access network device. The second message is used to request to obtain the capability information of the terminal.

For technical effects brought by the second aspect or the possible implementations of the second aspect, refer to the descriptions of the technical effects brought by the first aspect or the possible implementations of the first aspect.

According to a third aspect, an information processing method is provided. The method may be performed by a third communication apparatus. The third communication apparatus may be a communication device or a communication apparatus that can support the communication device in implementing functions required for the method, for example, a chip system. An example in which the communication device is a network device is used below for descriptions. The method includes:

The network device determines a first message. The first message includes application layer measurement configuration information.

The network device sends the first message to a first access network device.

In a possible implementation, the method further includes:

The network device receives capability information of a terminal from the first access network device. The capability information indicates that the terminal supports application layer measurement collection, for example, quality of experience measurement collection, of a network slice.

In a possible implementation, before the network device receives capability information of a terminal from the first access network device, the method further includes:

The network device sends a second message to the first access network device. The second message is used to request to obtain the capability information of the terminal.

For technical effects brought by the third aspect or the possible implementations of the third aspect, refer to the descriptions of the technical effects brought by the first aspect or the possible implementations of the first aspect.

According to a fourth aspect, an information processing method is provided. The method may be performed by a first communication apparatus. The first communication apparatus may be a communication device or a communication apparatus that can support the communication device in implementing functions required for the method, for example, a chip system. An example in which the communication device is a first access network device is used below for descriptions. The method includes:

The first access network device receives first application layer measurement configuration information from a network device. The first application layer measurement configuration information includes identification information and a service type. The identification information indicates a network slice.

The first access network device sends second application layer measurement configuration information to a terminal. The second application layer measurement configuration information indicates the terminal to perform quality of experience measurement collection on the service type.

The first access network device receives an application layer measurement report from the terminal. The application layer measurement report includes a result of performing application layer measurement by the terminal on the service type.

Different from the first aspect, in this aspect, the application layer measurement configuration information sent by the first access network device to the terminal includes the service type, but does not include the identification information. The application layer measurement configuration information may indicate a specific service on which the terminal performs application layer measurement. The first access network device may learn, based on the first application layer measurement configuration information sent by the network device, that the identification information uniquely corresponds to a serving type. Therefore, the first access network device can obtain an application layer measurement result related to the network slice without notifying the terminal of information about a specific network slice on which quality of experience measurement collection is performed.

According to a fifth aspect, an information processing method is provided. The method may be performed by a second communication apparatus. The second communication apparatus may be a communication device or a communication apparatus that can support the communication device in implementing functions required for the method, for example, a chip system. An example in which the communication device is a network device is used below for descriptions. The method includes:

The network device determines first application layer measurement configuration information. The first application layer measurement configuration information includes identification information and a service type. The identification information indicates a network slice.

The network device sends the first application layer measurement configuration information to a first access network device.

For technical effects brought by the fifth aspect or the possible implementations of the fifth aspect, refer to the descriptions of the technical effects brought by the fourth aspect or the possible implementations of the fourth aspect.

According to a sixth aspect, an embodiment of this application provides a communication apparatus. For beneficial effects, refer to the descriptions in the first aspect. Details are not described herein again. The communication apparatus has a function of implementing behavior in the foregoing method embodiment of the first aspect. The function may be implemented by hardware, or may be implemented by hardware executing corresponding software. The hardware or the software includes one or more modules corresponding to the foregoing function. In a possible implementation, the communication apparatus includes a sending unit and a receiving unit. The sending unit is configured to send application layer measurement configuration information to a terminal. The application layer measurement configuration information includes identification information. The identification information indicates a network slice. The receiving unit is configured to receive an application layer measurement report from the terminal. The application layer measurement report includes an application layer measurement result of the network slice. These modules may perform corresponding functions in the method examples in the first aspect. For details, refer to the detailed descriptions in the method examples. Details are not described herein again.

According to a seventh aspect, an embodiment of this application provides a communication apparatus. For beneficial effects, refer to the descriptions in the second aspect. Details are not described herein again. The communication apparatus has a function of implementing behavior in the method embodiment of the second aspect. The function may be implemented by hardware, or may be implemented by hardware executing corresponding software. The hardware or the software includes one or more modules corresponding to the foregoing function. In a possible implementation, the communication apparatus includes a sending unit and a receiving unit. The receiving unit is configured to: receive application layer measurement configuration information from a first access network device. The application layer measurement configuration information includes identification information. The identification information indicates a network slice. The sending unit is configured to send an application layer measurement report to the first access network device. The application layer measurement report includes an application layer measurement result of the network slice. These modules may perform corresponding functions in the method example in the second aspect. For details, refer to the detailed descriptions in the method example. Details are not described herein again.

According to an eighth aspect, an embodiment of this application provides a communication apparatus. For beneficial effects, refer to the descriptions in the third aspect. Details are not described herein again. The communication apparatus has a function of implementing behavior in the method embodiment of the third aspect. The function may be implemented by hardware, or may be implemented by hardware executing corresponding software. The hardware or the software includes one or more modules corresponding to the foregoing function. In a possible implementation, the communication apparatus includes a processing unit and a transceiver unit. The processing unit is configured to determine a first message. The first message includes application layer measurement configuration information. The sending unit is configured to send the first message to a first access network device. These modules may perform corresponding functions in the method example in the third aspect. For details, refer to the detailed descriptions in the method example. Details are not described herein again.

According to a ninth aspect, an embodiment of this application provides a communication apparatus. For beneficial effects, refer to the descriptions in the fourth aspect. Details are not described herein again. The communication apparatus has a function of implementing behavior in the method embodiment of the fourth aspect. The function may be implemented by hardware, or may be implemented by hardware executing corresponding software. The hardware or the software includes one or more modules corresponding to the foregoing function. In a possible implementation, the communication apparatus includes a sending unit and a receiving unit. The receiving unit is configured to receive first application layer measurement configuration information from a network device. The first application layer measurement configuration information includes identification information and a service type. The identification information indicates a network slice. The sending unit is configured to send second application layer measurement configuration information to a terminal. The second application layer measurement configuration information indicates the terminal to perform quality of experience measurement collection on the service type. The receiving unit is further configured to receive an application layer measurement report from the terminal. The application layer measurement report includes a result of performing application layer measurement by the terminal on the service type. These modules may perform corresponding functions in the method example in the fourth aspect. For details, refer to the detailed descriptions in the method example. Details are not described herein again.

According to a tenth aspect, an embodiment of this application provides a communication apparatus. For beneficial effects, refer to the descriptions in the fifth aspect. Details are not described herein again. The communication apparatus has a function of implementing behavior in the method embodiment of the fifth aspect. The function may be implemented by hardware, or may be implemented by hardware executing corresponding software. The hardware or the software includes one or more modules corresponding to the foregoing function. In a possible implementation, the communication apparatus includes a determining unit and a transceiver unit. The determining unit is configured to determine first application layer measurement configuration information. The first application layer measurement configuration information includes identification information and a service type. The identification information indicates a network slice. The transceiver unit is configured to send the first application layer measurement configuration information to a first access network device. These modules may perform corresponding functions in the method example in the fifth aspect. For details, refer to the detailed descriptions in the method example. Details are not described herein again.

According to an eleventh aspect, a communication apparatus is provided. The communication apparatus may be the communication apparatus in the sixth aspect, the seventh aspect, the eighth aspect, the ninth aspect, or the tenth aspect in the foregoing method embodiments, or may be a chip disposed in the communication apparatus in the sixth aspect, the seventh aspect, the eighth aspect, the ninth aspect, or the tenth aspect. The communication apparatus includes a processor, configured to implement the method performed by the first access network device, the network device, or the terminal in the first aspect, the second aspect, the third aspect, the fourth aspect, or the fifth aspect. The communication apparatus may further include a memory, configured to store program instructions and data. The memory is coupled to the processor. The processor may invoke and execute the program instructions stored in the memory, to implement any method performed by the first access network device, the network device, or the terminal in the first aspect, the second aspect, the third aspect, the fourth aspect, or the fifth aspect. The communication apparatus may further include a communication interface. The communication interface may be a transceiver in the communication apparatus. The transceiver is implemented, for example, by using an antenna, a feeder, and a codec in the communication apparatus. Alternatively, if a fifth communication apparatus is a chip disposed in the network device, the communication interface may be an input/output interface of the chip, for example, an input/output pin. The transceiver is used by the communication apparatus to communicate with another device. For example, when the communication apparatus is the terminal, the another device is the first access network device. Alternatively, when the communication apparatus is the first access network device, the another device is the terminal or the network device.

According to a twelfth aspect, an embodiment of this application provides a chip system. The chip system includes a processor, and may further include a memory, configured to implement the method performed by the first access network device, the network device, or the terminal in the first aspect, the second aspect, the third aspect, the fourth aspect, or the fifth aspect. The chip system may include a chip, or may include a chip and another discrete component.

According to a thirteenth aspect, an embodiment of this application provides a communication system. The system includes the communication apparatus according to the sixth aspect, the seventh aspect, and the eighth aspect, or the system includes the communication apparatus and the terminal according to the ninth aspect and the tenth aspect.

According to a fourteenth aspect, an embodiment of this application further provides a computer-readable storage medium that includes instructions. When the instructions are run on a computer, the computer is enabled to perform the method performed by the first access network device in the first aspect, the terminal in the second aspect, or the network device in the third aspect, or the computer is enabled to perform the method performed by the first access network device in the fourth aspect or the network device in the fifth aspect.

According to a fifteenth aspect, an embodiment of this application further provides a computer program product that includes computer program code. When the computer program code is run on a computer, the computer is enabled to perform the method performed by the first access network device in the first aspect, the terminal in the second aspect, or the network device in the third aspect, or the computer is enabled to perform the method performed by the first access network device in the fourth aspect or the network device in the fifth aspect.

For beneficial effects of the eleventh aspect to the fifteenth aspect and the implementations of the eleventh aspect to the fifteenth aspect, refer to the descriptions of beneficial effects of the methods and the implementations of the methods in the first aspect to the fifth aspect.

### BRIEF DESCRIPTION OF DRAWINGS

FIG. 1 is a schematic diagram of a network architecture of network slices according to an embodiment of this application;
FIG. 2 is a schematic diagram of a network architecture of a communication system to which an embodiment of this application is applicable;
FIG. 3 is a schematic flowchart of an example of an information processing method according to an embodiment of this application;
FIG. 4 is a schematic flowchart of an example of an information processing method according to an embodiment of this application;
FIG. 5 is a schematic flowchart of an example of an information processing method according to an embodiment of this application;
FIG. 6 is a schematic flowchart of an example of an information processing method according to an embodiment of this application;
FIG. 7 is a schematic flowchart of an example of an information processing method according to an embodiment of this application;
FIG. 8 is a schematic flowchart of an example of an information processing method according to an embodiment of this application;
FIG. 9 is a flowchart of an example of a communication apparatus according to an embodiment of this application;
FIG. 10 is a schematic diagram of a structure of a communication apparatus according to an embodiment of this application;
FIG. 11 is a schematic diagram of another structure of a communication apparatus according to an embodiment of this application;
FIG. 12 is a schematic diagram of a structure of a communication apparatus according to an embodiment of this application;
FIG. 13 is a schematic diagram of another structure of a communication apparatus according to an embodiment of this application; and
FIG. 14 is a schematic diagram of another structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

Before this application is described, some terms in embodiments of this application are first briefly explained and described, to help a person skilled in the art have a better understanding.

QoE refers to subjective experience of a user on quality and performance of a network, a service, or the like. An ultimate objective of a carrier is to provide various services for a terminal user. Therefore, a QoE requirement of the user is important. To meet the QoE requirement of the user as much as possible, the carrier may collect QoE measurement data, for example, a frame rate and jitter duration of a service run by a terminal, to optimize a network, and optimize the network based on the measurement data.

Currently, the terminal supports a streaming service and an MTSI service. The streaming service is a service in which content such as a picture or a text can be exchanged by using a Hypertext Transfer Protocol. That is, all resources related to the streaming service can be accessed by using the Hypertext Transfer Protocol, or the like. The MTSI service refers to a service that allows two or more users to perform multimedia session communication, and can provide real-time voice, video, or another type of data in bidirectional dialog transmission. For example, the streaming service may be, for example, a service related to a video application. The MTSI service may be, for example, a service related to a voice application supported by the terminal. From this perspective, the streaming service and the MTSI service may be considered as services related to specific applications of the terminal. A procedure for the carrier to collect QoE measurement data is as follows: A network side sends application layer measurement configuration information to a terminal. The application layer measurement configuration information includes a specific service type. The service type may indicate the streaming service or the MTSI service. The terminal performs related measurement on a service corresponding to the application layer measurement configuration information, and sends a measurement result to the network side. The network side can indicate the terminal to perform QoE measurement collection on only one service at a time. If the network side requires the terminal to perform QoE measurement collection on both the services, the network side needs to send the application layer measurement configuration information to the terminal twice.

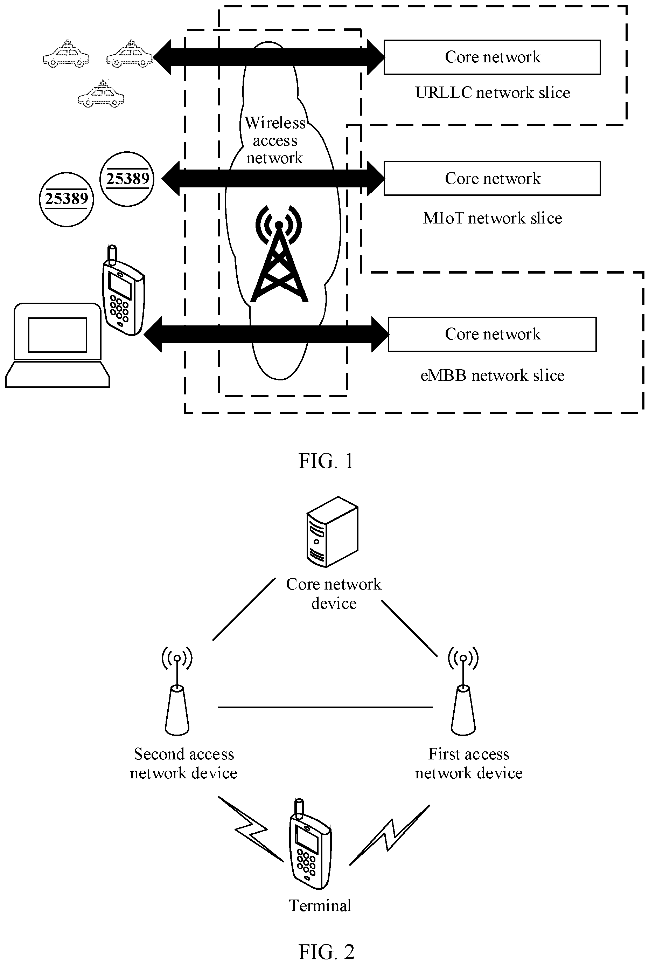

A network slice is introduced into a 5G communication system. The network slice is a logical network that provides specific network capabilities and network characteristics (A logical network that provides specific network capabilities and network characteristics). One physical network may be abstracted into a plurality of network slices. FIG. 1 is a schematic diagram of a network architecture of network slices. Each network slice may include a radio access network and a core network slice. Different core network slices may share the radio access network (which is shown by using dashed lines in FIG. 1). It should be noted that the radio access network may alternatively be network sliced. In this case, each network slice may include a radio access network slice and the core network slice. It should be understood that the core network slice has a core network function, for example, an access and mobility management function (access and mobility management function, AMF) and/or a session management function (session management function, SMF), or another possible core network function. The AMF is mainly responsible for access control and mobility management. The SMF may be connected to the AMF, and is mainly responsible for session management.

Different network slices may be distinguished by using S-NSSAI. The S-NSSAI includes at least slice/serving type (slice/service type, SST) information. The SST information may be used to describe expected behavior of the network slice, for example, a feature of the network slice and the serving type. The network slice supports a plurality of SSTs. For example, the network slice supports a URLLC type, and the network slice may also be referred to as a URLLC network slice. For another example, the network slice supports a MIoT type, and the network slice may also be referred to as a MIoT network slice. For still another example, the network slice supports an eMBB type, and the network slice may also be referred to as an eMBB network slice. For still another example, the network slice supports a V2X type, and the network slice may also be referred to as a V2X network slice. eMBB, URLLC, MIoT, and V2X may be understood as different SSTs. For ease of distinguishing, a type used below to distinguish a streaming service and an MTSI service that are supported by a terminal is referred to as a service type. A type used to distinguish a service supported by the network slice is referred to as a serving type. It should be understood that one serving type may be associated with one or more service types. For example, a V2X serving type may be associated with the streaming service and the MTSI service.

Optionally, the S-NSSAI may further include slice differentiator (slice differentiator, SD) information. The SD information may be understood as supplementary information of the SST. If the SST points to a plurality of network slices, the SD may be assisted to correspond to a unique network slice.

When a network slice service is provided, a network side may optimize resource allocation of the network slice, to meet a QoE requirement of a user. Similarly, before optimizing resource allocation of the network slice, the network side needs to perform QoE measurement collection on various types of services supported by the network slice. If a current procedure of collecting QoE measurement data is still used, the network side needs to send application layer measurement configuration information for a plurality of times. That is, the network side and the terminal need to perform this signaling interaction, and signaling overheads are large.

In addition, one service may be implemented based on the plurality of network slices. If the current procedure of collecting QoE measurement data is still used, it is clear that a result of performing application layer measurement by the terminal on a network slice cannot be obtained, and the network slice cannot be optimized.

An embodiment of this application provides an information processing method. The method may be applied to a communication system shown in FIG. 2. The system shown in FIG. 2 includes a core network device, a first access network device, a second access network device, and a terminal. The first access network device or the second access network device may communicate with the core network device. The first access network device may communicate with the second access network device. The terminal may communicate with the first access network device and/or the second access network device. The terminal simultaneously communicates with the first access network device and the second access network device. The communication is also referred to as multi-radio dual connectivity (multi-radio dual connectivity, MR-DC). In an MR-DC scenario, the first access network device may be a secondary access network device. The second access network device may be a master access network device. The first access network device and the second access network device may be access network devices of different communication standards, or may be access network devices of a same communication standard.

The access network device or a network device in embodiments of this application is an entity configured to receive or transmit a signal on a network side. The access network device may be a device used by the terminal to access a wireless network, and is also referred to as a radio access network (radio access network, RAN) device. The access network device may provide the terminal with functions such as radio resource management, quality of service management, data encryption, and data compression. For example, the access network device may include a base station (for example, an access point), may be a device that communicates with a wireless terminal over an air interface in an access network through one or more cells, may include a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an active antenna unit (active antenna unit, AAU), a wireless fidelity (wireless fidelity, Wifi) access point (access point, AP), or the like, may include an evolved NodeB (NodeB, eNB, or e-NodeB, evolved NodeB) in a long term evolution (long term evolution, LTE) system or a long term evolution-advanced (LTE-Advanced, LTE-A) system, may include a next generation NodeB (next generation NodeB, gNB) in a 5th generation (5th generation, 5G) mobile communication technology new radio (new radio, NR) system, or may include a central unit (central unit, CU) and a distributed unit (distributed unit, DU), a central unit-control plane (central unit-control plane, CU-CP), a central unit-user plane (central unit-user plane, CU-UP), or the like in a cloud access network (cloud radio access network, Cloud RAN) system. This is not limited in this embodiment of this application.

For example, the access network device is the gNB. The access network device may provide a control plane protocol and function and/or a user plane protocol and function of new radio (NR) for the terminal device, and access a 5G core (5th generation core, 5GC) network. Alternatively, the access network device may be an en-gNB. The access network device provides a control plane protocol and function and/or a user plane protocol and function of NR for the terminal device, and accesses a 4G core network, for example, an evolved packet core (evolved packet core, EPC) network. Alternatively, the access network device may be the evolved NodeB. The access network device provides a control plane protocol and function and/or a user plane protocol and function of evolved universal terrestrial radio access (evolved universal terrestrial radio access, E-UTRA) for the terminal device, and accesses a 4G core network, for example, an EPC. Alternatively, the access network device is an ng-eNB. The access network device provides a control plane protocol and function and/or a user plane protocol and function of E-UTRA for the terminal, and accesses a 5G core (5GC) network. Alternatively, the access network device is the eNB. The access network device provides a control plane protocol and function and/or a user plane protocol and function of E-UTRA for the terminal, and accesses a 4G core network, for example, an EPC. Alternatively, the access network device is the CU. The access network device may include an RRC layer, a service data adaptation protocol (service data adaptation protocol, SDAP) layer, and a packet data convergence protocol (packet data convergence protocol, PDCP) layer of the gNB, or may include an RRC layer and a PDCP layer of an ng-eNB. Alternatively, the access network device is the DU. The access network device mainly includes a radio link control (radio link control, RLC) layer, a medium access control (medium access control, MAC) layer, and a physical layer of the gNB or an ng-eNB. Alternatively, the access network device is the CU-CP, namely, the central unit-control plane. The access network device may include an RRC layer in a gNB-CU or an ng-eNB-CU and a control plane in a PDCP layer. Alternatively, the access network device is the CU-UP, namely, the central unit-user plane. The access network device may include an SDAP layer in a gNB-CU or an ng-eNB-CU and a user plane in a PDCP layer.

The core network device in embodiments of this application may be an access and mobility management function (access and mobility management function, AMF) that is mainly responsible for functions such as access control, mobility management, attachment and detachment, and gateway selection. The core network device in embodiments of this application is not limited to the AMF. For example, the core network device may be a session management function (session management function, SMF) that is mainly responsible for session management functions such as session setup, session modification, and session release.

The terminal in embodiments of this application may also be referred to as the terminal device. The terminal device is an entity configured to receive or transmit a signal on a user side. The terminal may be a device that provides voice and/or data connectivity for a user, for example, a handheld device having a wireless connection function, or a processing device connected to a wireless modem. The terminal may communicate with a core network through the radio access network (radio access network, RAN), and exchange a voice and/or data with the RAN. The terminal may include user equipment (user equipment, UE), a wireless terminal device, a mobile terminal device, a device-to-device (device-to-device, D2D) communication terminal device, an unmanned aerial vehicle, a V2X terminal device, a machine-to-machine/machine-type communications (machine-to-machine/machine-type communications, M2M/MTC) terminal device, an IoT terminal device (for example, an electricity meter or a water meter), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal may include a mobile phone (or referred to as a "cellular" phone), a computer having a mobile terminal device, or a portable, pocket-sized, handheld, or computer built-in mobile apparatus. For example, the terminal may be a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal may alternatively include a limited device, for example, a device with low power consumption, a device with a limited storage capability, or a device with a limited computing capability. For example, the terminal includes an information sensing device such as a barcode, radio frequency identification (radio frequency identification, RFID), a sensor, a global positioning system (global positioning system, GPS), or a laser scanner.

The terminal may be deployed on land (for example, deployed indoors, outdoors, or in a vehicle), may be deployed on the water (for example, deployed on a ship), or may be deployed in the air (for example, deployed on an airplane, a balloon, or a satellite). By way of example and not limitation, in embodiments of this application, the terminal may alternatively be a wearable device. The wearable device may also be referred to as a wearable intelligent device, an intelligent wearable device, or the like, and is a generic term for wearable devices that are developed by applying a wearable technology to intelligent implementations of daily wear, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

However, if the various terminals described above are located on a vehicle (for example, placed in the vehicle or installed in the vehicle), the terminals may be considered as vehicle-mounted terminal devices. For example, the vehicle-mounted terminal devices are also referred to as on-board units (on-board units, OBUs).

The following describes in detail the technical solutions provided in embodiments of this application with reference to the accompanying drawings.

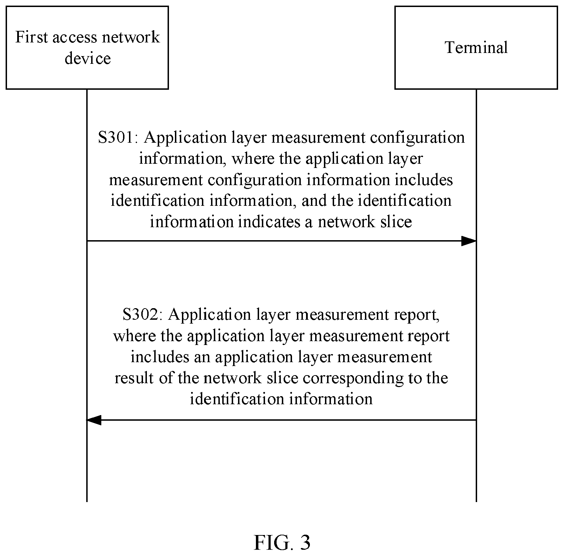

FIG. 3 is a schematic flowchart of an information processing method according to an embodiment of this application. In the following descriptions, an example in which the method is applied to the communication system shown in FIG. 2 is used. In addition, the method may be performed by at least two communication apparatuses, and the two communication apparatuses are, for example, a first communication apparatus and a second communication apparatus. The first communication apparatus may be an access network device or a communication apparatus (for example, a chip system) that can support the access network device in implementing functions required for the method, or certainly may be another communication apparatus. The second communication apparatus may be a terminal, or may be an apparatus (for example, a chip system) that can support the terminal in implementing functions required for the method, or certainly may be another communication apparatus. Implementation forms of the first communication apparatus and the second communication apparatus are not limited in this embodiment of this application. For example, the two communication apparatuses may be implemented in a same form, for example, implemented in a form of a device; the two communication apparatuses may be implemented in different forms, for example, the first communication apparatus is implemented in a form of a device, and the second communication apparatus is implemented in a form of the chip system; or the like. For ease of description, an example in which the method is performed by a first access network device and the terminal is used below. To be specific, an example in which the first communication apparatus is the first access network device and the second communication apparatus is the terminal is used. Specifically, a procedure of the information processing method according to this embodiment of this application is described as follows.

S301: The first access network device sends application layer measurement configuration information to the terminal. The application layer measurement configuration information includes identification information. The identification information indicates a network slice.

If the network slice needs to be optimized, the first access network device may indicate the terminal to perform QoE measurement collection on the network slice. For example, the first access network device sends the application layer measurement configuration (application layer measurement configuration) information to the terminal. The application layer measurement configuration information includes the identification information indicating the network slice, to indicate the terminal to perform QoE measurement collection on the network slice indicated by the identification information.

For example, the identification information indicating the network slice may include S-NSSAI. It should be understood that different values of the S-NSSAI respectively correspond to different serving types, for example, URLLC, MIoT, eMBB, and V2X. The application layer measurement configuration information sent by the first access network device to the terminal may include identification information of one network slice, or may include identification information of a plurality of network slices. The application layer measurement configuration information may include one piece of S-NSSAI, or may include a plurality of pieces of S-NSSAI. Each piece of S-NSSAI indicates one network slice. Because a serving type supported by one network slice may be associated with a plurality of service types, when measuring one network slice, the terminal can measure a plurality of services associated with the serving type supported by the network slice. In this embodiment of this application, the application layer measurement configuration information is sent once, so that the terminal can be indicated to perform application layer measurement on the network slice identified by the S-NSSAI included in the application layer measurement configuration information. That is, the terminal can be indicated to measure the plurality of services associated with the serving type supported by the network slice. In this way, the terminal can measure the plurality of services with less signaling interaction. Compared with the conventional technology, in this embodiment of this application, overheads can be reduced, and resources can be saved.

In an alternative manner, the identification information of the network slice may include the URLLC, the MIoT, the eMBB, the V2X, or the like.

In a possible implementation, the first access network device may send the application layer measurement configuration information to the terminal by using radio resource control (radio resource control, RRC) signaling. For example, the application layer measurement configuration information may be carried in an RRC connection reconfiguration message (which is also referred to as an RRC reconfiguration message) or an RRC connection resume message (which is also referred to as an RRC resume message). Alternatively, the first access network device may send the application layer measurement configuration information to the terminal by using another message. For example, the application layer measurement configuration information may be carried in a measurement configuration application layer (MeasConfigAppLayer) message.

One network slice can support implementation of a plurality of service types. One service type may alternatively be implemented based on a plurality of network slices. For example, there are a network slice 1, a network slice 2, a service type A, and a service type B. The network slice 1 may support implementation of the service type A and the service type B. The service type A may alternatively be implemented based on the network slice 1 and the network slice 2. In this case, if a current procedure of collecting QoE measurement data on a network side is still used, it is clear that a result of performing application layer measurement by the terminal on a network slice cannot be obtained, and the network slice cannot be optimized.

Therefore, in this embodiment of this application, the application layer measurement configuration information sent by the first access network device to the terminal device may further include a service type, and the application layer measurement configuration information indicates the terminal to perform QoE measurement collection on a serving type in the network slice. The foregoing example is still used, the service type A may be a streaming service, and the service type B may be an MTSI service. If the application layer measurement configuration information sent by the first access network device to the terminal device includes identification information and the service type B of the network slice 1, the first access network device indicates to perform QoE measurement collection on the MTSI service in the network slice 1. If the application layer measurement configuration information sent by the first access network device to the terminal device includes the identification information and the service type A of the network slice 1, the first access network device indicates to perform QoE measurement collection on the streaming service in the network slice 1. In other words, it may also be considered that QoE measurement collection is performed on the network slice 1 that supports the service type A, so that a network slice can be optimized.

S302: The terminal sends an application layer measurement report to the first access network device. The application layer measurement report includes an application layer measurement result of the network slice corresponding to the identification information.

The terminal receives the application layer measurement configuration information sent by the first access network device, and determines to perform QoE measurement collection on the network slice indicated by the identification information in the application layer measurement configuration information. Because the network slice may support one or more service types, QoE measurement collection on the network slice may be considered as performing QoE measurement collection on the one or more service types in the network slice. QoE measurement collection performed by the terminal on the network slice may include measurement collection performed by the terminal on jitter duration, packet round trip time, and/or the like of the network slice. The application layer measurement result of the network slice may include a result of performing measurement by the terminal on the jitter duration, packet round trip time, and/or the like of the network slice.

After performing application layer measurement on the network slice, the terminal obtains the application layer measurement report (application layer measurement report), and sends the application layer measurement report to the first access network device. It should be understood that the application layer measurement report includes the result of performing application layer measurement by the terminal on the network slice, for example, includes the result of performing measurement on the jitter duration and/or the packet round trip time. Alternatively, the application layer measurement report may include a result of performing application layer measurement by the terminal on the network slice and a service, for example, include a result of performing measurement by the terminal on a frame rate and/or jitter duration of a service in a network slice. It should be understood that the application layer measurement report further includes the identification information indicating the network slice, to indicate an application layer measurement result of a specific network slice.

It should be understood that the terminal may send the application layer measurement report to the first access network device by using RRC signaling. For example, the application layer measurement report may be carried in an RRC connection reconfiguration complete message (which is also referred to as an RRC reconfiguration complete message) or an RRC connection resume complete message (which is also referred to as an RRC resume complete message). Alternatively, the terminal may send the application layer measurement report to the first access network device by using another message. For example, the application layer measurement report may be carried in a measurement report application layer (MeasReportAppLayer) message.

Some terminals support QoE measurement collection on the network slice, and some terminals do not support QoE measurement collection on the network slice. To avoid a resource waste caused because the first access network device sends, to the terminal that does not support QoE measurement collection on the network slice, the application layer measurement configuration information that carries the identification information of the network slice, in another embodiment of this application, the terminal may notify the first access network device whether the terminal supports QoE measurement collection on the network slice.

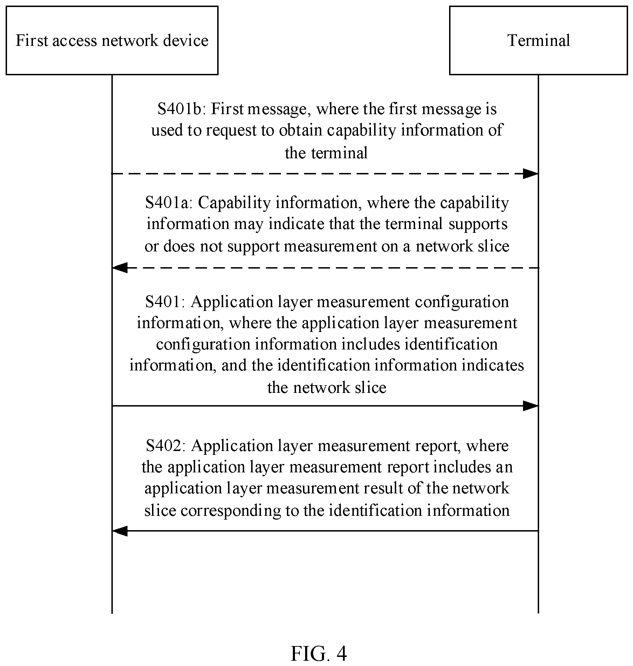

Specifically, refer to FIG. 4. S401a: A terminal may send capability information to a first access network device. The capability information may indicate that the terminal supports or does not support QoE measurement collection on a network slice.

For example, the capability information includes indication information. The indication information may indicate that the terminal supports or does not support QoE measurement collection performed on the network slice, or may indicate that the terminal supports or does not support QoE measurement collection performed on the network slice and a service. If the indication information indicates that QoE measurement collection performed on the network slice is supported, the terminal has a capability of supporting QoE measurement collection on the network slice. If the indication information indicates that QoE measurement collection performed on the network slice and the service is supported, the terminal has a capability of supporting QoE measurement collection on the network slice.

The first access network device receives the capability information. If it is determined that the capability indication information indicates that the terminal supports QoE measurement collection on the network slice, the first access network device may send, to the terminal, application layer measurement configuration information that carries identification information of the network slice. If the capability indication information indicates that the terminal does not support QoE measurement collection on the network slice, the application layer measurement configuration information sent by the first access network device to the terminal does not include the identification information of the network slice.

In some embodiments, the terminal may actively send the capability information to the first access network device. For example, the terminal periodically sends the capability information to the first access network device. Alternatively, the terminal sends the capability information to the first access network device when a capability changes. For example, when changing from supporting QoE measurement collection on a network slice 1 to supporting QoE measurement collection on a network slice 2, the terminal may send capability information to the first access network device, where the capability information indicates that the terminal has a capability of supporting QoE measurement collection on the network slice 2. The terminal actively sends the capability information of the terminal to the first access network device. The first access network device may send the application layer measurement configuration information based on the capability information of the terminal, to avoid as much as possible that the first access network device sends the application layer measurement configuration information to the terminal that does not support QoE measurement collection on the network slice, to reduce signaling overheads.

In some other embodiments, the terminal may alternatively send the capability information to the first access network device based on a requirement of the first access network device, so that a case in which the terminal sends a large amount of capability information, and this increases load of the terminal can be avoided. For example, before the terminal sends the capability information to the first access network device, the first access network device may perform S401b. S401b: The first access network device may send a first message to the terminal. The first message is used to request to obtain the capability information of the terminal. It should be understood that S401b is an optional step, and therefore is shown by using a dashed line in FIG. 4.

It should be understood that, after S401a, the first access network device may perform S401, and the terminal may perform S402. S401 is the same as S301, and S402 is the same as S302. Details are not described herein again. It should be noted that S401a is an optional step, and therefore is shown by using a dashed line in FIG. 4.

In a possible implementation, the first access network device does not know whether to indicate the terminal to perform QoE measurement collection on the network slice or a service type. In this case, the application layer measurement configuration information sent by the first access network device to the terminal may be notified by another network device such as a second access network device or a core network device.

For example, scenario 1: The terminal performs handover on an access network. The terminal is connected to the second access network device. The terminal is handed over from the second access network device to the first access network device. Before the terminal accesses the first access network device, the first access network device does not know network slices or service types that need to be measured by the terminal. However, the second access network device knows network slices or service types that are to be measured by the terminal. Therefore, the second access network device may notify the first access network device of the network slices or service types that need to be measured by the terminal.

Scenario 2: The terminal accesses a network. The terminal sets up a connection to the core network device. The core network device has been connected to the first access network device, but the first access network device has not set up a context of the terminal. In this scenario, the first access network device also does not know network slices or service types that need to be measured by the terminal. In this case, the core network device may notify the first access network device of the network slices or service types that need to be measured by the terminal.

Scenario 3: This scenario is a dual-connectivity scenario of the terminal. The terminal is connected to the first access network device and the second access network device. In this case, the first access network device may be considered as a secondary access network device. Relatively, the second access network device may be considered as a master access network device. If the second access network device wants to learn of an application layer measurement report of the terminal on the first access network device, the second access network device may notify the first access network device of network slices or service types that need to be measured by the terminal.

In the foregoing three example scenarios, the first access network device may send, under triggering of a network device, the application layer measurement configuration information to the terminal. In other words, the first access network device receives application layer measurement configuration information from another network device, and then sends the application layer measurement configuration information to the terminal.

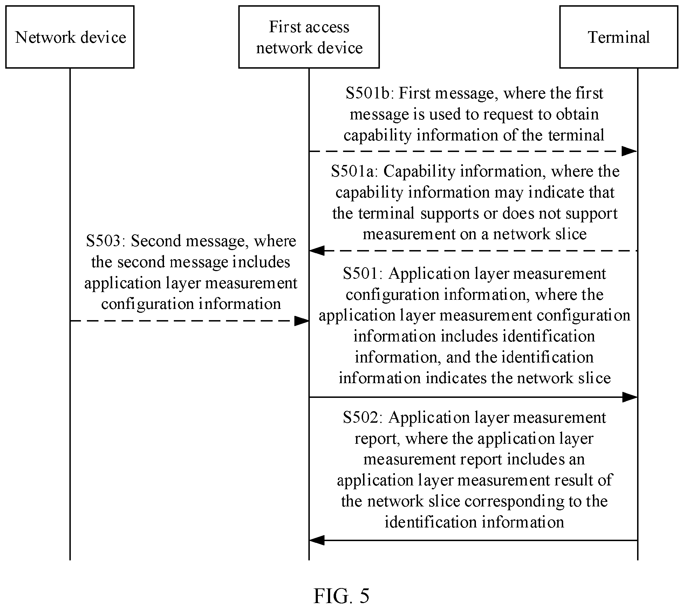

In some embodiments, refer to FIG. 5. S503: A network device sends a second message to a first access network device. The second message includes application layer measurement configuration information.

It should be understood that the network device may include a second access network device, a core network device, or a network management device, for example, an operation administration and maintenance (operation administration and maintenance, OAM) system.

For example, if the network device is the core network device, the second message may be an initial context setup request (initial context setup request) message that is used to request the first access network device to set up a context of a terminal. The initial context setup request message includes the application layer measurement configuration information. Alternatively, the second message may be a handover request (handover request) message that is used to request the first access network device to prepare a resource for the terminal to access the first access network device. The handover request message includes the application layer measurement configuration information. Alternatively, the second message may be a trace start (trace start) message sent by the core network device to the first access network device. The trace start message is used to initiate trace recording on the terminal. The trace start message includes the application layer measurement configuration information.

For example, if the network device is the second access network device, the second message may be a retrieve terminal device context response (retrieve UE context response) message that is used to transmit the context of the terminal to the first access network device. The retrieve terminal device context response message includes the application layer measurement configuration information. Alternatively, the second message may be the handover request (handover request) message that is used to request the first access network device to prepare the resource for the terminal to access the first access network device. The handover request message includes the application layer measurement configuration information. Alternatively, the second message may be the trace start (trace start) message. The trace start message is used to initiate trace recording on the terminal. The trace start message includes the application layer measurement configuration information. Alternatively, the second message may be a secondary node addition request (s-node addition request, or secondary gNB addition request) message that is used to request to prepare a resource for a dual-connectivity operation of the terminal. The secondary node addition request message includes the application layer measurement configuration information.

It should be understood that, after S503, the first access network device may perform S501, and the terminal may perform S502. S501 is the same as S301 and S401, and S502 is the same as S302 and S402. Details are not described herein again. It should be understood that, before S501, this embodiment of this application may further include S501a, or may further include S501a and S501b. S501a is the same as S401a, and S501b is the same as S401b. Details are not described herein again. It should be noted that S503 is an optional step, and therefore is shown by using a dashed line in FIG. 5.

For example, in the foregoing scenario 3, if the terminal does not have the capability of supporting QoE measurement collection on the network slice, the network device directly sends the application layer measurement configuration information to the first access network device. This may cause a resource waste. Therefore, the first access network device may notify the network device whether the terminal supports QoE measurement collection on the network slice. That is, the first access network device sends the capability information of the terminal to the network device. It should be understood that the network device may be the second access network device, the core network device, or another possible network device, for example, the network management device.

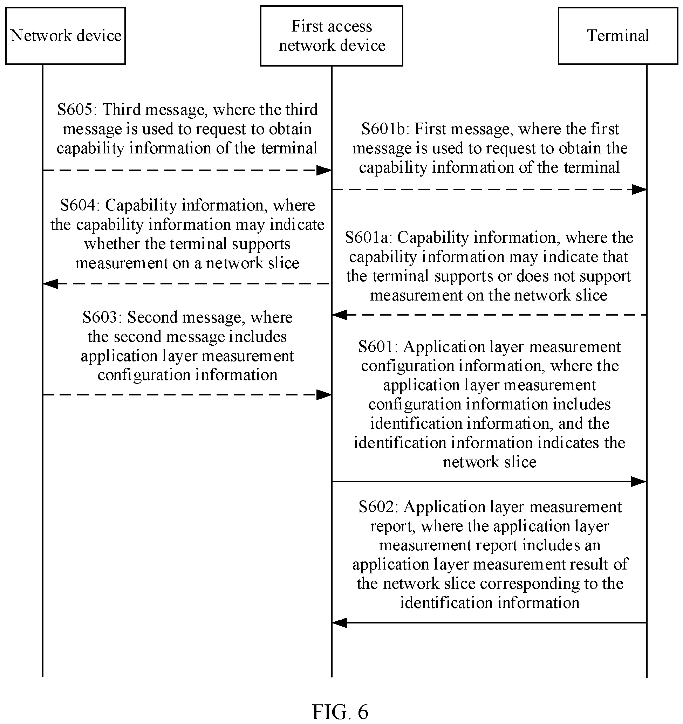

Specifically, refer to FIG. 6. S604: A first access network device sends capability information of a terminal to a network device.

In some embodiments, the first access network device may actively send the capability information of the terminal to the network device. For example, the first access network device periodically sends the capability information of the terminal to the network device. Alternatively, the first access network device may send the capability information of the terminal to the network device when a capability of the terminal changes, to avoid as much as possible that the network device sends application layer measurement configuration information to a first access network device accessed by a terminal that does not support QoE measurement collection on a network slice, to reduce signaling overheads.

In some other embodiments, the first access network device may alternatively send the capability information of the terminal to the network device based on a requirement of the network device. This may avoid a resource waste caused because the first access network device sends the capability information to the network device for a large quantity of times. For example, before the first access network device sends the capability information of the terminal to the network device, S605 may be performed. S605: The network device may send a third message to the first access network device. The third message is used to request to obtain the capability information of the terminal.

It should be understood that this embodiment of this application may further include the foregoing S501a, S501b, S501, and S502. For ease of distinguishing, in FIG. 6, S601b is used to represent S501b, S601a is used to represent S501a, S601 is used to represent S501, and S602 is used to represent S502. It should be noted that a sequence of S605, S601b, and S601a is not limited in this embodiment of this application. To be specific, S605 may be performed after S601a and/or S601b, or may be performed before S601a and/or S601b. Similarly, a sequence of S604, S601b, and S601a is not limited. To be specific, S604 may be performed after S601a and/or S601b, or may be performed before S601a and/or S601b. It should be understood that, in FIG. 6, S601a, S601b, S603, S604, and S605 are optional steps, and therefore are shown by using dashed lines in FIG. 6.

In a possible scenario, a first access network device is a separate device. For example, the first access network device may be a separate base station, and may include a CU and a DU. The CU may be connected to the DU through an interface, for example, an F1 interface. Further, a function of the CU may be implemented by one entity or may be implemented by different entities. For example, the function of the CU may be further divided. For example, a control plane (control panel, CP) is separated from a user plane (user panel, UP). That is, a CU- control plane (CU-CP) is separated from a CU-user plane (CU-UP). For example, the CU-CP and the CU-UP may be implemented by different functional entities. The CU-CP and the CU-UP may be coupled to the DU to jointly implement a function of the base station.

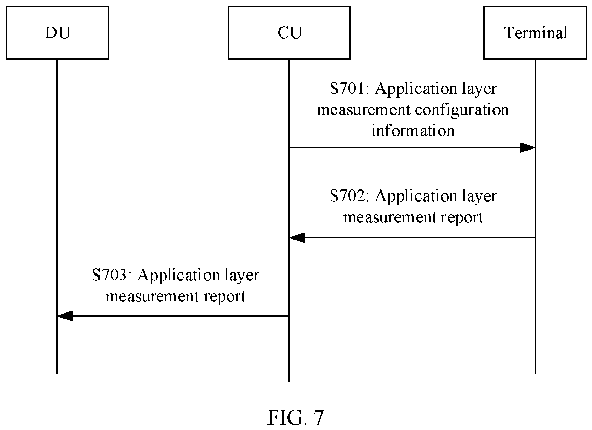

In this case, for a procedure of an information processing method according to an embodiment of this application, refer to FIG. 7.

S701: A CU in a first access network device sends application layer measurement configuration information to a terminal.

S702: The CU in the first access network device receives an application layer measurement report from the terminal.

S703: The CU in the first access network device sends the application layer measurement report to a DU or a CU-UP in the first access network device.

The DU may evaluate, based on the received application layer measurement report, whether a resource of a network slice needs to be optimized. If the resource of the network slice needs to be optimized, the DU may optimize the resource of the network slice. For example, the DU may dynamically allocate or schedule the resource of the network slice. For example, the DU processes a buffer of the resource or a resource block of the network slice (for example, allocates more storage resources to the network slice), selects a radio bearer for performing data packet scheduling (for example, selects a radio bearer with a higher priority to transmit a data packet in the network slice), adjusts a transmit power level or a receive power level required for sending the data packet in the network slice, and manages a specific resource block used in the network slice (for example, allocates the specific resource block to the data packet in the network slice, so that the resource block is used only to transmit the data packet in the network slice).

It should be understood that if the CU includes a CU-CP and the CU-UP, the foregoing S701 may be that the CU-CP in the first access network device sends the application layer measurement configuration information to the terminal; S702 may be that the CU-CP in the first access network device receives the application layer measurement report from the terminal; and S703 may be that the CU-CP in the first access network device sends the application layer measurement report to the DU or the CU-UP in the first access network device. Correspondingly, the DU/CU-UP may evaluate, based on the received application layer measurement report, whether the resource of the network slice needs to be optimized. If the resource of the network slice needs to be optimized, the DU/CU-UP may optimize the resource of the network slice.

It should be understood that a difference between FIG. 7 and FIG. 3 lies only in that the first access network device is the separate device. To be specific, the first access network device includes the CU and the DU, or includes the CU-CP, the CU-UP, and the DU. For detailed information exchange with the terminal, refer to the embodiment in FIG. 3. For example, the application layer measurement configuration information sent by the CU or the CU-CP to the terminal also includes identification information indicating the network slice. For another example, the terminal may send capability information of the terminal to the CU or the CU-CP. The CU or the CU-CP may send the terminal a message, for example, the first message, used to request to obtain the capability information of the terminal. Details are not described herein again.

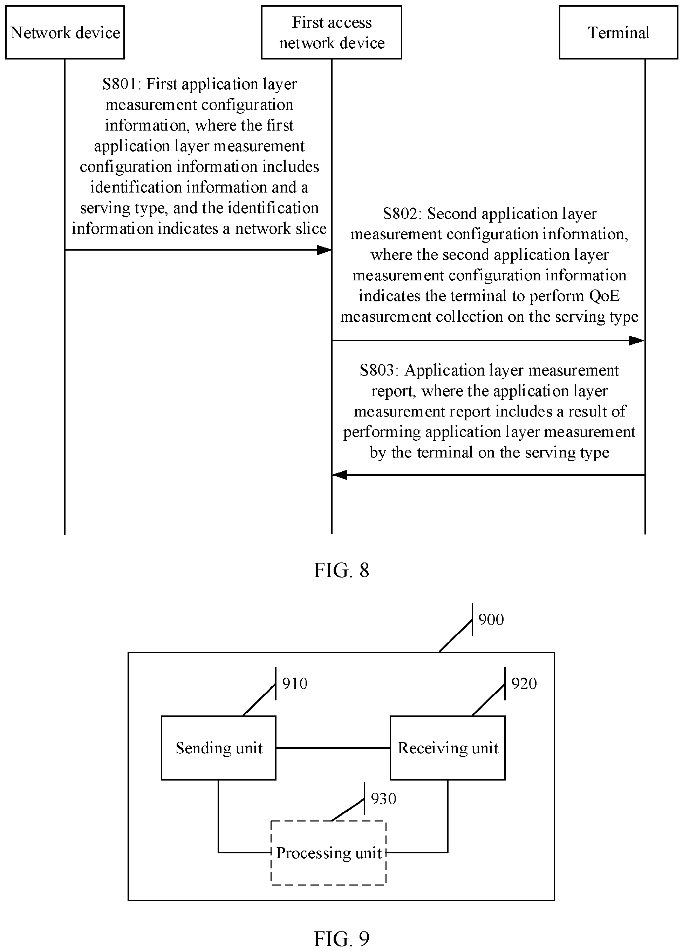

FIG. 8 is a schematic flowchart of another information processing method according to an embodiment of this application. In the following descriptions, an example in which the method is applied to the communication system shown in FIG. 2 is used. In addition, the method may be performed by at least three communication apparatuses, and the three communication apparatuses are, for example, a first communication apparatus, a second communication apparatus, and a third communication apparatus. The first communication apparatus may be an access network device or a communication apparatus (for example, a chip system) that can support the access network device in implementing functions required for the method, or certainly may be another communication apparatus. Alternatively, the second communication apparatus may be a network device or a communication apparatus (for example, a chip system) that can support the network device in implementing functions required for the method, or certainly may be another communication apparatus. The third communication apparatus may be a terminal, or may be an apparatus (for example, a chip system) that can support the terminal in implementing functions required for the method, or certainly may be another communication apparatus. Implementation forms of the first communication apparatus, the second communication apparatus, and the third communication apparatus are not limited in this embodiment of this application. For example, the three communication apparatuses may be implemented in a same form, for example, implemented in a form of a device; the three communication apparatuses may be implemented in different forms, for example, the first communication apparatus is implemented in a form of the device, the second communication apparatus is implemented in a form of the chip system, and the third communication apparatus is implemented in a form of the chip system; or the like For ease of description, an example in which the method is performed by a first access network device and the terminal is used below. To be specific, an example in which the first communication apparatus is the first access network device, the second communication apparatus is the network device, and the third communication apparatus is the terminal is used. The network device may include a core network device, for example, a second access network device, or a network management device. Specifically, a procedure of the information processing method according to this embodiment of this application is described as follows.

S801: The network device sends first application layer measurement configuration information to the first access network device. The first application layer measurement configuration information includes identification information and a service type. The identification information indicates a network slice.

Similar to the foregoing embodiments in FIG. 3 to FIG. 6, the identification information may be S-NSSAI. In this embodiment of this application, the first application layer measurement configuration information may include one piece of S-NSSAI, or may include a plurality of pieces of S-NSSAI. In addition, the first application layer measurement configuration information may further include the service type, and the first application layer measurement configuration information may indicate to perform QoE measurement collection on the service type in the network slice indicated by the identification information.

It should be understood that the network device is the core network device. The first application layer measurement configuration information may be carried in an initial context setup request message, a handover request message, a trace start message, or the like. The network device is the second access network device. The first application layer measurement configuration information may be carried in a retrieve terminal device context response message, the handover request message, the trace start message, a secondary node addition request message, or the like. For details, refer to the related descriptions in the foregoing embodiments in FIG. 3 to FIG. 6. Details are not described herein again.

S802: The first access network device sends second application layer measurement configuration information to the terminal. The second application layer measurement configuration information indicates the terminal to perform QoE measurement collection on the service type.

If the network slice indicated by the identification information included in the first application layer measurement configuration information supports one service type, after receiving the first application layer measurement configuration information sent by a network device, the first access network device may send the second application layer measurement configuration information to the terminal. A difference from the foregoing embodiments in FIG. 3 to FIG. 6 lies in that the second application layer measurement configuration information includes the service type, and does not include the S-NSSAI, and the second application layer measurement configuration information indicates a specific service on which the terminal performs application layer measurement. In other words, the first access network device can obtain an application layer measurement result related to the network slice without notifying the terminal of information about a specific network slice on which application layer measurement is performed.

It should be understood that the first access network device may send the second application layer measurement configuration information to the terminal by using RRC signaling. For example, the second application layer measurement configuration information may be carried in an RRC connection reconfiguration message (which may also be referred to as an RRC reconfiguration message for short) or an RRC connection resume message (which may also be referred to as an RRC resume message for short). Alternatively, the second application layer measurement configuration information may be carried in a measurement configuration application layer message.

S803: The terminal sends an application layer measurement report to the first access network device. The application layer measurement report includes a result of performing application layer measurement by the terminal on the service type.

The terminal receives the second application layer measurement configuration information, starts an application layer measurement procedure, and obtains the result of performing application layer measurement on the service type. Then, the terminal sends the application layer measurement report to the first access network device. The application layer measurement report includes the result of performing application layer measurement by the terminal on the service type. It should be understood that the application layer measurement report includes the service type, and the application layer measurement report indicates an application layer measurement result of a specific service type.

It should be understood that the terminal may send the application layer measurement report to the first access network device by using RRC signaling. For example, the application layer measurement report may be carried in an RRC connection reconfiguration complete message (which may also be referred to as an RRC reconfiguration complete message for short) or an RRC connection resume complete message (which may also be referred to as an RRC resume complete message for short). Alternatively, the application layer measurement report may be carried in a measurement report application layer message.

After receiving the application layer measurement report sent by the terminal device, the first access network device adds identification information, for example, the S-NSSAI, corresponding to the application layer measurement report, and sends the S-NSSAI and the application layer measurement report to an application layer measurement report server, for example, a trace collection entity (trace collection entity, TCE). The TCE may optimize, based on the application layer measurement report and the S-NSSAI, a network slice indicated by the S-NSSAI.

It should be understood that if the first access network device is a separate device, a CU/CU-CP in the first access network device sends the application layer measurement report and the S-NSSAI to a DU/CU-UP.

It can be learned that in this embodiment of this application, the application layer measurement configuration information sent by a network side to the terminal may include the identification information indicating the network slice. Because one network slice supports a plurality of service types, and one serving type may be associated with the plurality of service types, the network side needs to send the application layer measurement configuration information only once, so that the terminal can perform application layer measurement on a plurality of services. This reduces a quantity of times of information exchange between the network side and the terminal, and reduces overheads.

In the foregoing embodiments provided in this application, the methods provided in embodiments of this application are separately described from perspectives of interaction between the first access network device, the network device, and the terminal device. To implement functions in the foregoing methods provided in embodiments of this application, each of the first access network device, the network device, and the terminal device may include a hardware structure and/or a software module, and implement the foregoing functions in a form of the hardware structure, the software module, or a combination of the hardware structure and the software module. Whether a specific function in the foregoing functions is performed by using a hardware structure, a software module, or a combination of the hardware structure and the software module depends on a specific application and a design constraint of the technical solutions.

With reference to the accompanying drawings, the following describes apparatuses configured to implement the foregoing methods in embodiments of this application. Therefore, all the foregoing content may be used in the following embodiments. Repeated content is not described again.

FIG. 9 is a schematic block diagram of a communication apparatus 900 according to an embodiment of this application. The communication apparatus 900 may correspondingly implement the functions or steps implemented by the first access network device, the network device, or the terminal in the foregoing method embodiments. The communication apparatus may include a sending unit 910 and a receiving unit 920, and optionally, may further include a processing unit 930. The processing unit 930 is not indispensable, and therefore is shown by using a dashed line in FIG. 9. Optionally, the communication apparatus may further include a storage unit. The storage unit may be configured to store instructions (code or a program) and/or data. The sending unit 910, the receiving unit 920, and the processing unit 930 may be coupled to the storage unit. For example, the processing unit 930 may read the instructions (the code or the program) and/or the data in the storage unit, to implement corresponding methods. The foregoing units may be disposed independently, or may be partially or completely integrated.

In some possible implementations, the communication apparatus 900 can correspondingly implement behavior and functions of the first access network device in the foregoing method embodiments. For example, the communication apparatus 900 may be a first access network device, or may be a component (for example, a chip or a circuit) used in the first access network device. The sending unit 910 and the receiving unit 920 may be configured to perform all receiving or sending operations performed by the first access network device in the embodiment shown in FIG. 3, for example, S301 and S302 in the embodiment shown in FIG. 3, and/or configured to support another process of the technology described in this specification. The processing unit 930 is configured to perform all operations, other than the receiving and sending operations, performed by the first access network device in the embodiment shown in FIG. 3, and/or configured to support another process of the technology described in this specification. Alternatively, the sending unit 910 and the receiving unit 920 may be configured to perform all receiving or sending operations performed by the first access network device in the embodiment shown in FIG. 4, for example, S401a, S401b, S401, and S402 in the embodiment shown in FIG. 4, and/or configured to support another process of the technology described in this specification. The processing unit 930 is configured to perform all operations, other than the receiving and sending operations, performed by the first access network device in the embodiment shown in FIG. 4, and/or configured to support another process of the technology described in this specification. Alternatively, the sending unit 910 and the receiving unit 920 may be configured to perform all receiving or sending operations performed by the first access network device in the embodiment shown in FIG. 5, for example, S501a, S501b, S501, S502, and S503 in the embodiment shown in FIG. 5, and/or configured to support another process of the technology described in this specification. The processing unit 930 is configured to perform all operations, other than the receiving and sending operations, performed by the first access network device in the embodiment shown in FIG. 5, and/or configured to support another process of the technology described in this specification. Alternatively, the sending unit 910 and the receiving unit 920 may be configured to perform all receiving or sending operations performed by the first access network device in the embodiment shown in FIG. 6, for example, S601a, S601b, S601, S602, S603, S604, and S605 in the embodiment shown in FIG. 6, and/or configured to support another process of the technology described in this specification. The processing unit 930 is configured to perform all operations, other than the receiving and sending operations, performed by the first access network device in the embodiment shown in FIG. 6, and/or configured to support another process of the technology described in this specification. Alternatively, the sending unit 910 and the receiving unit 920 may be configured to perform all receiving or sending operations performed by the first access network device in the embodiment shown in FIG. 7, for example, S701, S702, and S703 in the embodiment shown in FIG. 7, and/or configured to support another process of the technology described in this specification. The processing unit 930 is configured to perform all operations, other than the receiving and sending operations, performed by the first access network device in the embodiment shown in FIG. 7, and/or configured to support another process of the technology described in this specification. Alternatively, the sending unit 910 and the receiving unit 920 may be configured to perform all receiving or sending operations performed by the first access network device in the embodiment shown in FIG. 8, for example, S801, S802, and S803 in the embodiment shown in FIG. 8, and/or configured to support another process of the technology described in this specification. The processing unit 930 is configured to perform all operations, other than the receiving and sending operations, performed by the first access network device in the embodiment shown in FIG. 8, and/or configured to support another process of the technology described in this specification.

In some embodiments, the sending unit 910 is configured to send application layer measurement configuration information to a terminal. The application layer measurement configuration information includes identification information. The identification information indicates a network slice. The receiving unit 920 is configured to receive an application layer measurement report from the terminal. The application layer measurement report includes an application layer measurement result of the network slice.

In an optional implementation, the identification information includes S-NSSAI.

In an optional implementation, the application layer measurement configuration information further includes a service type. The application layer measurement configuration information indicates to perform QoE measurement collection on the service type in the network slice.

In an optional implementation, the receiving unit 920 is further configured to receive a first message from a network device. The first message includes the application layer measurement configuration information.

In an optional implementation, the receiving unit 920 is further configured to receive capability information from the terminal. The capability information indicates that the terminal supports QoE measurement collection on the network slice.

In an optional implementation, before the communication apparatus 900 receives the capability information from the terminal, the sending unit 910 is further configured to send a second message to the terminal. The second message is used to request to obtain the capability information of the terminal.

In an optional implementation, the sending unit 910 is further configured to send the capability information of the terminal to the network device. The capability information indicates that the terminal supports QoE measurement collection.

In an optional implementation, before the communication apparatus 900 sends the capability information of the terminal to the network device, the receiving unit 920 is further configured to receive a third message from the network device. The third message is used to request to obtain the capability information of the terminal.

In an optional implementation, the communication apparatus 900 includes a CU and a DU, and both the CU and the DU may include the sending unit and the receiving unit. That the sending unit 910 sends application layer measurement configuration information to a terminal may be that the CU sends the application layer measurement configuration information to the terminal. In other words, the sending unit 910 included in the CU sends the application layer measurement configuration information to the terminal.

In an optional implementation, the communication apparatus 900 includes the CU and the DU. That the receiving unit 920 receives an application layer measurement report from the terminal may be that the CU receives the application layer measurement report from the terminal. In other words, the receiving unit 920 included in the DU receives the application layer measurement report from the terminal.

In a possible implementation, the sending unit 910 in the CU sends the application layer measurement report of the terminal to the receiving unit 920 in the DU.

In some other embodiments, the receiving unit 920 is configured to receive first application layer measurement configuration information from a network device. The first application layer measurement configuration information includes identification information and a service type. The identification information indicates a network slice. The sending unit 910 is configured to send second application layer measurement configuration information to a terminal. The second application layer measurement configuration information indicates the terminal to perform QoE measurement collection on the service type. The receiving unit 920 is further configured to receive an application layer measurement report from the terminal. The application layer measurement report includes a result of performing application layer measurement by the terminal on the service type.

It should be understood that the processing unit 930 in this embodiment of this application may be implemented by a processor or a processor-related circuit component. The sending unit 910 and the receiving unit 920 may be implemented by a transceiver, a transceiver-related circuit component, or a communication interface.

In some possible implementations, the communication apparatus 900 can correspondingly implement behavior and functions of the terminal in the foregoing method embodiments. For example, the communication apparatus 900 may be a terminal, or may be a component (for example, a chip or a circuit) used in the terminal. The sending unit 910 and the receiving unit 920 may be configured to perform all receiving or sending operations performed by the terminal in the embodiment shown in FIG. 3, for example, S301 and S302 in the embodiment shown in FIG. 3, and/or configured to support another process of the technology described in this specification. The processing unit 930 is configured to perform all operations, other than the receiving and sending operations, performed by the terminal in the embodiment shown in FIG. 3, and/or configured to support another process of the technology described in this specification. Alternatively, the sending unit 910 and the receiving unit 920 may be configured to perform all receiving or sending operations performed by the terminal in the embodiment shown in FIG. 4, for example, S401a, S401b, S401, and S402 in the embodiment shown in FIG. 4, and/or configured to support another process of the technology described in this specification. The processing unit 930 is configured to perform all operations, other than the receiving and sending operations, performed by the terminal in the embodiment shown in FIG. 4, and/or configured to support another process of the technology described in this specification. Alternatively, the sending unit 910 and the receiving unit 920 may be configured to perform all receiving or sending operations performed by the terminal in the embodiment shown in FIG. 5, for example, S501a, S501b, S501, and S502 in the embodiment shown in FIG. 5, and/or configured to support another process of the technology described in this specification. The processing unit 930 is configured to perform all operations, other than the receiving and sending operations, performed by the terminal in the embodiment shown in FIG. 5, and/or configured to support another process of the technology described in this specification. Alternatively, the sending unit 910 and the receiving unit 920 may be configured to perform all receiving or sending operations performed by the terminal in the embodiment shown in FIG. 6, for example, S601a, S601b, S601, and S602 in the embodiment shown in FIG. 6, and/or configured to support another process of the technology described in this specification. The processing unit 930 is configured to perform all operations, other than the receiving and sending operations, performed by the terminal in the embodiment shown in FIG. 6, and/or configured to support another process of the technology described in this specification. Alternatively, the sending unit 910 and the receiving unit 920 may be configured to perform all receiving or sending operations performed by the terminal in the embodiment shown in FIG. 7, for example, S701 and S702 in the embodiment shown in FIG. 7, and/or configured to support another process of the technology described in this specification. The processing unit 930 is configured to perform all operations, other than the receiving and sending operations, performed by the terminal in the embodiment shown in FIG. 7, and/or configured to support another process of the technology described in this specification. Alternatively, the sending unit 910 and the receiving unit 920 may be configured to perform all receiving or sending operations performed by the terminal in the embodiment shown in FIG. 8, for example, S802 and S803 in the embodiment shown in FIG. 8, and/or configured to support another process of the technology described in this specification. The processing unit 930 is configured to perform all operations, other than the receiving and sending operations, performed by the terminal in the embodiment shown in FIG. 8, and/or configured to support another process of the technology described in this specification.

In some embodiments, the receiving unit 920 is configured to receive application layer measurement configuration information from a first access network device. The application layer measurement configuration information includes identification information. The identification information indicates a network slice. The sending unit 910 is configured to send an application layer measurement report to the first access network device. The application layer measurement report includes an application layer measurement result of the network slice.

In an optional implementation, the identification information includes S-NSSAI.

In an optional implementation, the application layer measurement configuration information further includes a service type. The application layer measurement configuration information indicates to perform QoE measurement collection on the service type in the network slice.

In an optional implementation, the sending unit 910 is further configured to send capability information to the first access network device. The capability information indicates that the terminal supports quality of experience measurement collection on the network slice.

In an optional implementation, before the communication apparatus 900 sends the capability information to the first access network device, the receiving unit 920 is further configured to receive a second message from the first access network device. The second message is used to request to obtain the capability information of the terminal.

It should be understood that the processing unit 930 in this embodiment of this application may be implemented by a processor or a processor-related circuit component. The sending unit 910 and the receiving unit 920 may be implemented by a transceiver or a transceiver-related circuit component.

In some possible implementations, the communication apparatus 900 can correspondingly implement behavior and functions of the network device in the foregoing method embodiments. For example, the communication apparatus 900 may be a network device, or may be a component (for example, a chip or a circuit) used in the network device. The sending unit 910 and the receiving unit 920 may be configured to perform all receiving or sending operations performed by the network device in the embodiment shown in FIG. 5, for example, S503 in the embodiment shown in FIG. 5, and/or configured to support another process of the technology described in this specification. The processing unit 930 is configured to perform all operations, other than the receiving and sending operations, performed by the network device in the embodiment shown in FIG. 5, and/or configured to support another process of the technology described in this specification. Alternatively, the sending unit 910 and the receiving unit 920 may be configured to perform all receiving or sending operations performed by the network device in the embodiment shown in FIG. 6, for example, S603, S604, and S605 in the embodiment shown in FIG. 6, and/or configured to support another process of the technology described in this specification. The processing unit 930 is configured to perform all operations, other than the receiving and sending operations, performed by the network device in the embodiment shown in FIG. 6, and/or configured to support another process of the technology described in this specification. Alternatively, the sending unit 910 and the receiving unit 920 may be configured to perform all receiving or sending operations performed by the network device in the embodiment shown in FIG. 8, for example, S801 in the embodiment shown in FIG. 8, and/or configured to support another process of the technology described in this specification. The processing unit 930 is configured to perform all operations, other than the receiving and sending operations, performed by the network device in the embodiment shown in FIG. 8, and/or configured to support another process of the technology described in this specification.

In some embodiments, the sending unit 910 sends a first message to a first access network device. The first message includes application layer measurement configuration information. It should be understood that before the sending unit 910 sends the first message to the first access network device, the processing unit 930 may determine the first message.

In an optional implementation, the receiving unit 920 is configured to receive capability information of a terminal from the first access network device. The capability information indicates that the terminal supports QoE measurement collection on a network slice.

In an optional implementation, before the communication apparatus 900 receives the capability information of the terminal from the first access network device, the sending unit 910 is further configured to send a second message to the first access network device. The second message is used to request to obtain the capability information of the terminal.

In some other embodiments, the sending unit 910 sends first application layer measurement configuration information to a first access network device. The first application layer measurement configuration information includes identification information and a service type. The identification information indicates a network slice. It should be understood that before the sending unit 910 sends the first application layer measurement configuration information to the first access network device, the processing unit 930 may determine the first application layer measurement configuration information.

It should be understood that the processing unit 930 in this embodiment of this application may be implemented by a processor or a processor-related circuit component. The sending unit 910 and the receiving unit 920 may be implemented by a transceiver or a transceiver-related circuit component.

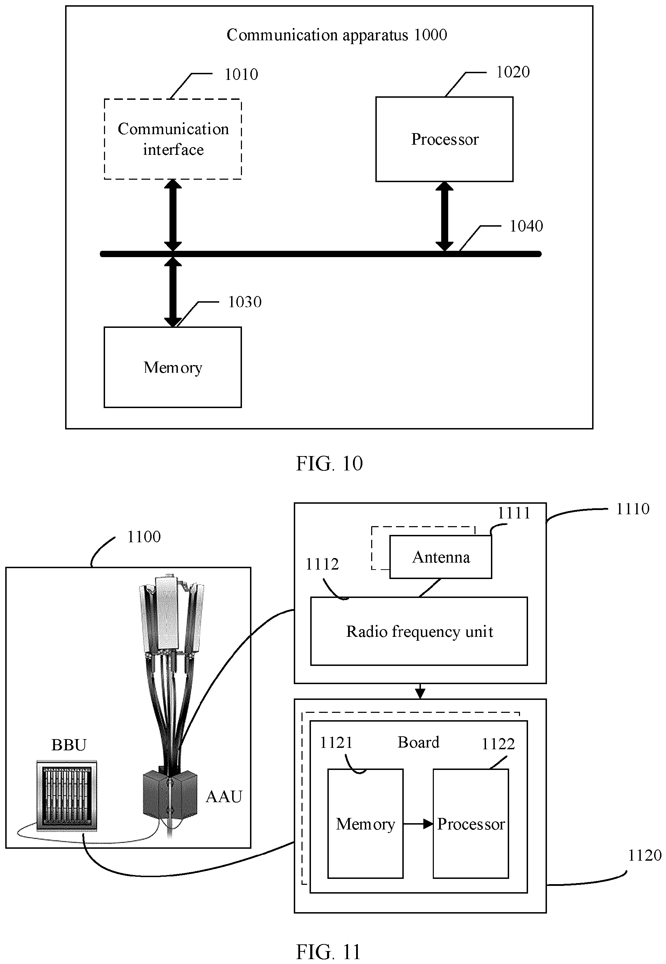

FIG. 10 shows a communication apparatus 1000 according to an embodiment of this application. The communication apparatus 1000 may be a terminal device that can implement functions of the terminal in the methods provided in embodiments of this application. Alternatively, the communication apparatus 1000 may be a network device that can implement functions of the first access network device or the network device in the methods provided in embodiments of this application. Alternatively, the communication apparatus 1000 may be an apparatus that can support the terminal in implementing corresponding functions in the methods provided in embodiments of this application, or an apparatus that can support the first access network device or the network device in implementing corresponding functions in the methods provided in embodiments of this application. The communication apparatus 1000 may be a chip system. In this embodiment of this application, the chip system may include a chip, or may include a chip and another discrete component.

In some embodiments, the communication apparatus 1000 includes a communication interface 1010, configured to communicate with another device through a transmission medium, so that adevice in the communication apparatus 1000 may communicate with the another device. For example, when the communication apparatus is the terminal, the another device is the first access network device or the network device. Alternatively, when the communication apparatus is the first access network device, the another device is the terminal or the network device. A processor 1020 may send and receive data by using the communication interface 1010.

The communication apparatus 1000 further includes at least one processor 1020, configured to implement or support the communication apparatus 1000 in implementing the functions of the first access network device, the network device, or the terminal in the methods provided in embodiments of this application.

For example, the communication apparatus 1000 can correspondingly implement behavior and functions of the first access network device in the foregoing method embodiments. The communication interface 1010 may be configured to perform all receiving or sending operations performed by the first access network device in the embodiment shown in FIG. 3, for example, S301 and S302 in the embodiment shown in FIG. 3, and/or configured to support another process of the technology described in this specification. The processor 1020 is configured to perform all operations, other than the receiving and sending operations, performed by the first access network device in the embodiment shown in FIG. 3, and/or configured to support another process of the technology described in this specification. Alternatively, the communication interface 1010 may be configured to perform all receiving or sending operations performed by the first access network device in the embodiment shown in FIG. 4, for example, S401a, S401b, S401, and S402 in the embodiment shown in FIG. 4, and/or configured to support another process of the technology described in this specification. The processor 1020 is configured to perform all operations, other than the receiving and sending operations, performed by the first access network device in the embodiment shown in FIG. 4, and/or configured to support another process of the technology described in this specification. Alternatively, the communication interface 1010 may be configured to perform all receiving or sending operations performed by the first access network device in the embodiment shown in FIG. 5, for example, S501a, S501b, S501, S502, and S503 in the embodiment shown in FIG. 5, and/or configured to support another process of the technology described in this specification. The processor 1020 is configured to perform all operations, other than the receiving and sending operations, performed by the first access network device in the embodiment shown in FIG. 5, and/or configured to support another process of the technology described in this specification. Alternatively, the communication interface 1010 may be configured to perform all receiving or sending operations performed by the first access network device in the embodiment shown in FIG. 6, for example, S601a, S601b, S601, S602, S603, S604, and S605 in the embodiment shown in FIG. 6, and/or configured to support another process of the technology described in this specification. The processor 1020 is configured to perform all operations, other than the receiving and sending operations, performed by the first access network device in the embodiment shown in FIG. 6, and/or configured to support another process of the technology described in this specification. Alternatively, the communication interface 1010 may be configured to perform all receiving or sending operations performed by the first access network device in the embodiment shown in FIG. 7, for example, S701, S702, and S703 in the embodiment shown in FIG. 7, and/or configured to support another process of the technology described in this specification. The processor 1020 is configured to perform all operations, other than the receiving and sending operations, performed by the first access network device in the embodiment shown in FIG. 7, and/or configured to support another process of the technology described in this specification. Alternatively, the communication interface 1010 may be configured to perform all receiving or sending operations performed by the first access network device in the embodiment shown in FIG. 8, for example, S801, S802, and S803 in the embodiment shown in FIG. 8, and/or configured to support another process of the technology described in this specification. The processor 1020 is configured to perform all operations, other than the receiving and sending operations, performed by the first access network device in the embodiment shown in FIG. 8, and/or configured to support another process of the technology described in this specification.

For example, the communication apparatus 1000 can correspondingly implement behavior and functions of the terminal in the foregoing method embodiments. The communication interface 1010 may be configured to perform all receiving or sending operations performed by the terminal in the embodiment shown in FIG. 3, for example, S301 and S302 in the embodiment shown in FIG. 3, and/or configured to support another process of the technology described in this specification. The processor 1020 is configured to perform all operations, other than the receiving and sending operations, performed by the terminal in the embodiment shown in FIG. 3, and/or configured to support another process of the technology described in this specification. Alternatively, the communication interface 1010 may be configured to perform all receiving or sending operations performed by the terminal in the embodiment shown in FIG. 4, for example, S401a, S401b, S401, and S402 in the embodiment shown in FIG. 4, and/or configured to support another process of the technology described in this specification. The processor 1020 is configured to perform all operations, other than the receiving and sending operations, performed by the terminal in the embodiment shown in FIG. 4, and/or configured to support another process of the technology described in this specification. Alternatively, the communication interface 1010 may be configured to perform all receiving or sending operations performed by the terminal in the embodiment shown in FIG. 5, for example, S501a, S501b, S501, and S502 in the embodiment shown in FIG. 5, and/or configured to support another process of the technology described in this specification. The processing unit 930 is configured to perform all operations, other than the receiving and sending operations, performed by the terminal in the embodiment shown in FIG. 5, and/or configured to support another process of the technology described in this specification. Alternatively, the communication interface 1010 may be configured to perform all receiving or sending operations performed by the terminal in the embodiment shown in FIG. 6, for example, S601a, S601b, S601, and S602 in the embodiment shown in FIG. 6, and/or configured to support another process of the technology described in this specification. The processor 1020 is configured to perform all operations, other than the receiving and sending operations, performed by the terminal in the embodiment shown in FIG. 6, and/or configured to support another process of the technology described in this specification. Alternatively, the communication interface 1010 may be configured to perform all receiving or sending operations performed by the terminal in the embodiment shown in FIG. 7, for example, S701 and S702 in the embodiment shown in FIG. 7, and/or configured to support another process of the technology described in this specification. The processor 1020 is configured to perform all operations, other than the receiving and sending operations, performed by the terminal in the embodiment shown in FIG. 7, and/or configured to support another process of the technology described in this specification. Alternatively, the communication interface 1010 may be configured to perform all receiving or sending operations performed by the terminal in the embodiment shown in FIG. 8, for example, S802 and S803 in the embodiment shown in FIG. 8, and/or configured to support another process of the technology described in this specification. The processor 1020 is configured to perform all operations, other than the receiving and sending operations, performed by the terminal in the embodiment shown in FIG. 8, and/or configured to support another process of the technology described in this specification.

For example, the communication apparatus 1000 can correspondingly implement behavior and functions of the network device in the foregoing method embodiments. The communication interface 1010 may be configured to perform all receiving or sending operations performed by the network device in the embodiment shown in FIG. 5, for example, S503 in the embodiment shown in FIG. 5, and/or configured to support another process of the technology described in this specification. The processor 1020 is configured to perform all operations, other than the receiving and sending operations, performed by the network device in the embodiment shown in FIG. 5, and/or configured to support another process of the technology described in this specification. Alternatively, the communication interface 1010 may be configured to perform all receiving or sending operations performed by the network device in the embodiment shown in FIG. 6, for example, S603, S604, and S605 in the embodiment shown in FIG. 6, and/or configured to support another process of the technology described in this specification. The processor 1020 is configured to perform all operations, other than the receiving and sending operations, performed by the network device in the embodiment shown in FIG. 6, and/or configured to support another process of the technology described in this specification. Alternatively, the communication interface 1010 may be configured to perform all receiving or sending operations performed by the network device in the embodiment shown in FIG. 8, for example, S801 in the embodiment shown in FIG. 8, and/or configured to support another process of the technology described in this specification. The processor 1020 is configured to perform all operations, other than the receiving and sending operations, performed by the network device in the embodiment shown in FIG. 8, and/or configured to support another process of the technology described in this specification.

In some other embodiments, the communication apparatus 1000 may further include at least one memory 1030, configured to store program instructions and/or data. The memory 1030 is coupled to the processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions and/or the data stored in the memory 1030, so that the communication apparatus 1000 implements corresponding methods. At least one of the at least one memory may be included in the processor.

In still some other embodiments, the communication interface 1010 may be specifically a transceiver. In other words, the communication apparatus 1000 may include the processor 1020, at least one memory 1030, and the transceiver. It should be understood that the sending unit 910, the receiving unit 920, and the communication interface 1010 may be specifically transceivers.

A specific connection medium between the communication interface 1010, the processor 1020, and the memory 1030 is not limited in this embodiment of this application. In this embodiment of this application, the memory 1030, the processor 1020, and the communication interface 1010 are connected to each other through a bus 1040 in FIG. 10. The bus is represented by using a bold line in FIG. 10. A connection manner between other components is only an example for descriptions, and is not limited thereto. The bus may be classified into an address bus, a data bus, a control bus, and the like. For ease of representation, only one bold line is used to represent the bus in FIG. 10, but this does not mean that there is only one bus or only one type of bus.

In this embodiment of this application, the processor 1020 may be a general-purpose processor, a digital signal processor, an application-specific integrated circuit, a field programmable gate array or another programmable logic device, a discrete gate or transistor logic device, or a discrete hardware component, and can implement or perform the methods, steps, and logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware in the processor and a software module.

In embodiments of this application, the memory 1030 may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

It should be noted that the communication apparatus in the foregoing embodiment may be a terminal device, a circuit, or a chip used in the terminal device, or may be another combined component or component that has functions of the terminal device. When the communication apparatus is the terminal device, the transceiver unit may be the transceiver, and may include an antenna, a radio frequency circuit, and the like. The processing module may be the processor, for example, a central processing unit (central processing unit, CPU). When the communication apparatus is the component that has functions of the terminal device, the transceiver unit may be a radio frequency unit, and the processing module may be the processor. When the communication apparatus is the chip system, the transceiver unit may be an input/output interface of the chip system, and the processing module may be a processor of the chip system.

FIG. 11 is a simplified schematic diagram of a structure of a communication apparatus. For ease of understanding and illustration, in FIG. 11, the communication apparatus uses an example in which a first access network device and a network device are base stations. The base station may be used in the system shown in FIG. 2, may be the network device in FIG. 2, and performs functions of the first access network device and the network device in the foregoing method embodiments. The communication apparatus 1100 may include one or more radio frequency units, such as a remote radio unit (remote radio unit, RRU) 1110 and one or more active antenna units (active antenna units, AAUs) (which may also be referred to as digital units, digital units, DUs) 1120. The AAU may be considered as a combination of a baseband unit (baseband unit, BBU) and an antenna, that is, a structure in which a radio frequency function and the antenna are integrated. An antenna port on the AAU may be connected to an external RRU or a built-in radio frequency unit. The RRU 1110 may be referred to as a communication module, and corresponds to the sending unit 910 and the receiving unit 920 in FIG. 9. Optionally, the communication module may also be referred to as a transceiver machine, a transceiver circuit, a transceiver, or the like, and the communication module may include at least one antenna 1111 and a radio frequency unit 1112. The RRU 1110 is mainly configured to: receive and send a radio frequency signal, and perform conversion between a radio frequency signal and a baseband signal, for example, send indication information to a terminal device. The AAU 1120 is mainly configured to: perform baseband processing, control a base station, and the like. The RRU 1110 and the AAU 1120 may be physically disposed together, or may be physically separated, that is, in a distributed base station.

The AAU 1120 is a control center of the base station, and may also be referred to as a processing module. The AAU 1120 may correspond to the processing unit 930 in FIG. 9, and is mainly configured to implement baseband processing functions such as channel coding, multiplexing, modulation, and spreading. For example, the AAU (the processing module) may be configured to control the base station to perform an operation procedure related to the network device in the foregoing method embodiments, for example, generate the foregoing indication information.

In an example, the AAU 1120 may include one or more boards. A plurality of boards may jointly support a radio access network (for example, an LTE network) having a single access standard, or may separately support radio access networks (for example, the LTE network, a 5G network, or another network) having different access standards. The AAU 1120 further includes a memory 1121 and a processor 1122. The memory 1121 is configured to store necessary instructions and necessary data. The processor 1122 is configured to control the base station to perform a necessary action. For example, the processor 1122 is configured to control the base station to perform the operation procedure related to the network device in the foregoing method embodiments. For example, the processor 1122 is configured to perform all operations, other than sending and receiving operations, performed by the first access network device in embodiments shown in FIG. 3 to FIG. 8, and/or configured to support another process of the technology described in this specification. Alternatively, the processor 1122 is configured to perform all operations, other than sending and receiving operations, performed by the network device in embodiments shown in FIG. 5 to FIG. 8, and/or configured to support another process of the technology described in this specification.

The memory 1121 and the processor 1122 may serve one or more boards. That is, a memory and a processor may be independently disposed on each board. Alternatively, a plurality of boards may share a same memory and a same processor. In addition, a necessary circuit may further be disposed on each board.

An embodiment of this application further provides a communication apparatus. The communication apparatus may be a terminal or a circuit. The communication apparatus may be configured to perform actions performed by the terminal in the foregoing method embodiments.

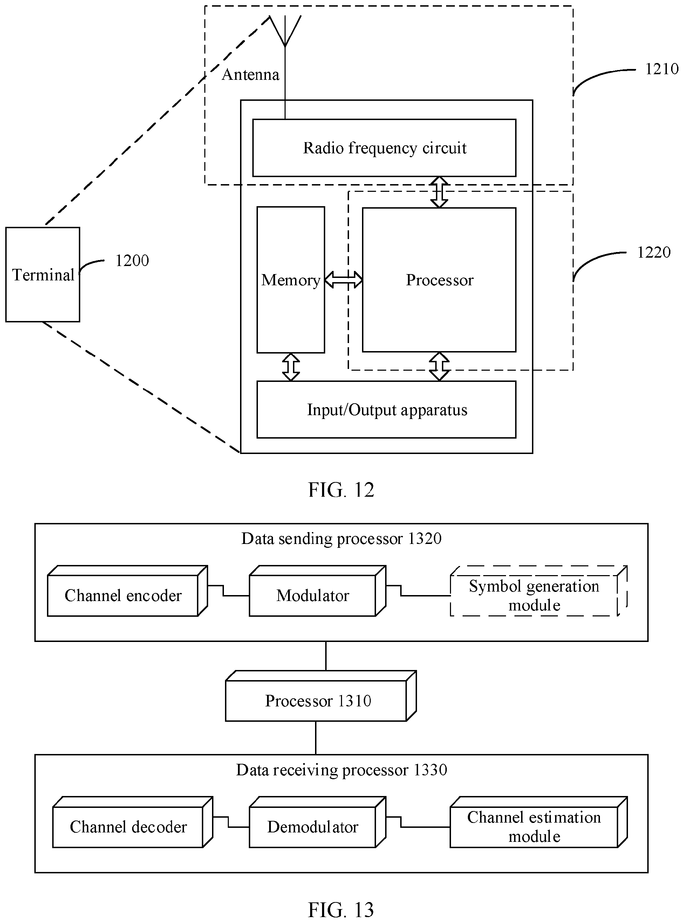

FIG. 12 is a simplified schematic diagram of a structure of a terminal. For ease of understanding and illustration, in FIG. 12, an example in which the terminal is a mobile phone is used. As shown in FIG. 12, the terminal includes a processor, a memory, a radio frequency circuit, an antenna, and an input/output apparatus. The processor is mainly configured to: process a communication protocol and communication data, control an on-board unit, execute a software program, and process data of the software program. The memory is mainly configured to store the software program and data. A radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the device, the radio frequency circuit receives a radio frequency signal through the antenna, converts the radio frequency signal into a baseband signal, and outputs the baseband signal to the processor; and the processor converts the baseband signal into data, and processes the data. For ease of description, FIG. 12 shows only one memory and one processor. In an actual device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver unit of the apparatus, and the processor having a processing function may be considered as a processing unit of the apparatus. As shown in FIG. 12, the apparatus includes a transceiver unit 1210 and a processing unit 1220. The transceiver unit 1210 may also be referred to as a transceiver, a transceiver machine, a transceiver apparatus, or the like. The processing unit 1220 may also be referred to as a processor, a processing board, a processing module, a processing apparatus, or the like. Optionally, a component that is in the transceiver unit 1210 and that is configured to implement a receiving function may be considered as a receiving unit, and a component that is in the transceiver unit 1210 and that is configured to implement a sending function may be considered as a sending unit. In other words, the transceiver unit 1210 includes the receiving unit and the sending unit. The transceiver unit 1210 sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1210 is configured to perform a sending operation and a receiving operation on a terminal side in the foregoing method embodiments, and the processing unit 1220 is configured to perform an operation other than the receiving and sending operations of the terminal in the foregoing method embodiments.

For example, in an implementation, the transceiver unit 1210 may be configured to perform S301 and S302 in the embodiment shown in FIG. 3, and/or configured to support another process of the technology described in this specification.

For another example, in an implementation, the transceiver unit 1210 may be configured to perform S401a, S401b, S401, and S402 in the embodiment shown in FIG. 4, and/or configured to support another process of the technology described in this specification.

For another example, in an implementation, the transceiver unit 1210 may be configured to perform S501a, S501b, S501, S502, and S503 in the embodiment shown in FIG. 5, and/or configured to support another process of the technology described in this specification.

For another example, in an implementation, the transceiver unit 1210 may be configured to perform S601a, S601b, S601, S602, S603, and S604 in the embodiment shown in FIG. 6, and/or configured to support another process of the technology described in this specification.

For another example, in an implementation, the transceiver unit 1210 may be configured to perform S701, S702, and S703 in the embodiment shown in FIG. 7, and/or configured to support another process of the technology described in this specification.

For another example, in an implementation, the transceiver unit 1210 may be configured to perform S801, S802, and S803 in the embodiment shown in FIG. 8, and/or configured to support another process of the technology described in this specification.

When the communication apparatus is a chip apparatus or circuit, the apparatus may include the transceiver unit and the processing unit. The transceiver unit may be an input/output circuit and/or a communication interface. The processing unit is an integrated processor, a microprocessor, or an integrated circuit.

In this embodiment, refer to an apparatus shown in FIG. 13. In an example, the apparatus may implement functions similar to functions of the processing unit 930 in FIG. 9. In FIG. 13, the apparatus includes a processor 1310, a data sending processor 1320, and a data receiving processor 1330. The processing unit 930 in the foregoing embodiments may be the processor 1310 in FIG. 13, and completes corresponding functions. The processing unit 930 in the foregoing embodiments may be the data sending processor 1320 and/or the data receiving processor 1330 in FIG. 13. Although FIG. 13 shows a channel encoder and a channel decoder, it may be understood that these modules are only examples, and do not constitute a limitation on this embodiment.

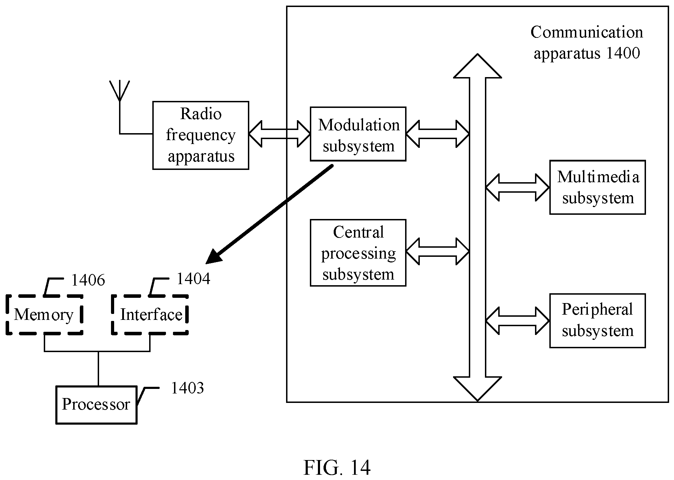

FIG. 14 shows another form of this embodiment. The communication apparatus 1400 includes modules such as a modulation subsystem, a central processing subsystem, and a peripheral subsystem. The communication apparatus in this embodiment may be used as the modulation subsystem. Specifically, the modulation subsystem may include a processor 1403 and an interface 1404. The processor 1403 completes the functions of the processing unit 930, and the interface 1404 completes functions of the sending unit 910 and the receiving unit 920. In another variation, the modulation subsystem includes a memory 1406, the processor 1403, and a program that is stored in the memory 1406 and that can run on the processor. When executing the program, the processor 1403 implements the method of the terminal device in the foregoing method embodiments. It should be noted that the memory 1406 may be non-volatile or volatile. The memory 1406 may be located inside the modulation subsystem, or may be located in the communication apparatus 1400, provided that the memory 1406 can be connected to the processor 1403.

An embodiment of this application further provides a communication system. Specifically, the communication system includes a first access network device and a terminal, includes the first access network device, the network device, and a terminal, or may further include more terminals and access network devices. For example, the communication system includes the first access network device and the terminal that are configured to implement the related functions in FIG. 3, FIG. 4, or FIG. 7. Alternatively, the communication system includes the first access network device, the network device, and the terminal that are configured to implement the related functions in FIG. 5, FIG. 6, or FIG. 8.

The first access network device is separately configured to implement functions of network parts related to FIG. 3 to FIG. 8. The terminal is configured to implement the functions of the terminals related to FIG. 3 to FIG. 8. The network device is separately configured to implement functions of network parts related to FIG. 5 to FIG. 8. For example, the first access network device may perform S301 and S302 in the embodiment shown in FIG. 3, and the terminal may perform S301 and S302 in the embodiment shown in FIG. 3. For another example, the first access network device may perform S401a, S401b, S401, and S402 in the embodiment shown in FIG. 4, and the terminal may perform S401a, S401b, S401, and S402 in the embodiment shown in FIG. 4. For another example, the first access network device may perform S501a, S501b, S501, S502, and S503 in the embodiment shown in FIG. 5, the terminal may perform S501a, S501b, S501, and S502 in the embodiment shown in FIG. 5, and the network device may perform S503 in the embodiment shown in FIG. 5. For another example, the first access network device may perform, for example, S601a, S601b, S601, S602, S603, S604, and S605 in the embodiment shown in FIG. 6, the terminal may perform S601a, S601b, S601, and S602 in the embodiment shown in FIG. 6, and the network device may perform S603, S604, and S605 in the embodiment shown in FIG. 6. For still another example, the first access network device may perform S701 and S702 in the embodiment shown in FIG. 7, and the terminal may perform S701 and S702 in the embodiment shown in FIG. 7. For still another example, the first access network device may perform S801, S802, and S803 in the embodiment shown in FIG. 8, the terminal may perform S801 and S802 in the embodiment shown in FIG. 8, and the network device may perform S803 in the embodiment shown in FIG. 8.

An embodiment of this application further provides a computer-readable storage medium, including instructions. When the instructions run on a computer, the computer is enabled to perform the methods performed by the terminal, the first access network device, or the network device in FIG. 3 to FIG. 5.

An embodiment of this application further provides a computer program product, including computer program code. When the computer program code is run on a computer, the computer is enabled to perform the methods performed by the terminal, the first access network device, or the network device in FIG. 3 to FIG. 8.

An embodiment of this application provides a chip system. The chip system includes a processor, may further include a memory, and is configured to implement functions of the terminal, the first access network device, or the network device in the foregoing methods. The chip system may include a chip, or may include a chip and another discrete component.

An embodiment of this application further provides a communication apparatus, including a processor and an interface. The processor is configured to perform the information processing method in any one of the foregoing method embodiments.

It should be understood that the communication apparatus may be a chip. The processor may be implemented by hardware, or may be implemented by software. When the processor is implemented by the hardware, the processor may be a logic circuit, an integrated circuit, or the like. When the processor is implemented by the software, the processor may be a general-purpose processor. The general-purpose processor is implemented by reading software code stored in a memory. The memory may be integrated into the processor, or may be located outside the processor and exist independently.

It should be understood that the terms "system" and "network" may be used interchangeably in embodiments of this application. "At least one" means one or more, and "a plurality of' means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first message and a second message are merely intended to distinguish between different messages, but do not indicate that the two messages are different in a priority, a sending sequence, or importance.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined according to A. However, it should be further understood that determining B based on A does not mean that B is determined based only on A. B may alternatively be determined based on A and/or other information.

All or some of the methods in embodiments of this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. An information processing method, comprising:
sending, by a first access network device, application layer measurement configuration information to a terminal, wherein the application layer measurement configuration information comprises identification information, and the identification information indicates a network slice; and
receiving, by the first access network device, an application layer measurement report from the terminal, wherein the application layer measurement report comprises an application layer measurement result of the network slice.

2. The method according to claim 1, wherein the identification information comprises single network slice selection assistance information S-NSSAI.

3. The method according to claim 1 or 2, wherein the application layer measurement configuration information further comprises a service type, and the application layer measurement configuration information indicates to perform quality of experience measurement collection on the service type in the network slice.

4. The method according to any one of claims 1 to 3, wherein the method further comprises:
receiving, by the first access network device, a first message from a network device, wherein the first message comprises the application layer measurement configuration information.

5. The method according to any one of claims 1 to 4, wherein the method further comprises:
receiving, by the first access network device, capability information from the terminal, wherein the capability information indicates that the terminal supports application layer measurement collection on the network slice.

6. The method according to claim 5, wherein before the receiving, by the first access network device, capability information from the terminal, the method further comprises:
sending, by the first access network device, a second message to the terminal, wherein the second message is used to request to obtain the capability information of the terminal.

7. The method according to claim 4, wherein the method further comprises:
sending, by the first access network device, capability information of the terminal to the network device, wherein the capability information indicates that the terminal supports application layer measurement collection on the network slice.

8. The method according to claim 7, wherein before the sending, by the first access network device, capability information of the terminal to the network device, the method further comprises:
receiving, by the first access network device, a third message from the network device, wherein the third message is used to request to obtain the capability information of the terminal.

9. The method according to any one of claims 1 to 8, wherein the first access network device comprises a central unit CU and a distributed unit DU, and the method further comprises:
sending, by the CU in the first access network device, the application layer measurement configuration information to the terminal; and
receiving, by the CU in the first access network device, the application layer measurement report from the terminal, and sending the application layer measurement report of the terminal to the DU in the first access network device.

10. An information processing method, wherein the method comprises:
receiving, by a first access network device, first application layer measurement configuration information from a network device, wherein the first application layer measurement configuration information comprises identification information and a service type, and the identification information indicates a network slice;
sending, by the first access network device, second application layer measurement configuration information to a terminal, wherein the second application layer measurement configuration information indicates the terminal to perform application layer measurement on the service type; and
receiving, by the first access network device, an application layer measurement report from the terminal, wherein the application layer measurement report comprises a result of performing application layer measurement by the terminal on the service type.

11. An information processing method, comprising:
receiving, by a terminal, application layer measurement configuration information from a first access network device, wherein the application layer measurement configuration information comprises identification information, and the identification information indicates a network slice; and
sending, by the terminal, an application layer measurement report to the first access network device, wherein the application layer measurement report comprises an application layer measurement result of the network slice.

12. An information processing method, comprising:
determining, by a network device, a first message, wherein the first message comprises application layer measurement configuration information; and
sending, by the network device, the first message to a first access network device.

13. An information processing method, comprising:
determining, by a network device, first application layer measurement configuration information, wherein the first application layer measurement configuration information comprises identification information and a serving type, and the identification information indicates a network slice; and
sending, by the network device, the first application layer measurement configuration information to a first access network device.

14. A communication apparatus, comprising:
a sending unit, configured to send application layer measurement configuration information to a terminal, wherein the application layer measurement configuration information comprises identification information, and the identification information indicates a network slice; and
a receiving unit, configured to receive an application layer measurement report from the terminal, wherein the application layer measurement report comprises an application layer measurement result of the network slice.

15. The communication apparatus according to claim 14, wherein the identification information comprises single network slice selection assistance information S-NSSAI.

16. The communication apparatus according to claim 14 or 15, wherein the application layer measurement configuration information further comprises a service type, and the application layer measurement configuration information indicates to perform quality of experience measurement collection on the service type in the network slice.

17. The communication apparatus according to any one of claims 14 to 16, wherein the receiving unit is further configured to:
receive a first message from a network device, wherein the first message comprises the application layer measurement configuration information.

18. The communication apparatus according to any one of claims 14 to 17, wherein the receiving unit is further configured to:
receive capability information from the terminal, wherein the capability information indicates that the terminal supports quality of experience measurement collection on the network slice.

19. The communication apparatus according to claim 18, wherein before receiving, by a first access network device, capability information from the terminal, the sending unit is further configured to:
send a second message to the terminal, wherein the second message is used to request to obtain the capability information of the terminal.

20. The communication apparatus according to claim 17, wherein the sending unit is further configured to:
send capability information of the terminal to the network device, wherein the capability information indicates that the terminal supports quality of experience measurement collection on the network slice.

21. The communication apparatus according to claim 20, wherein before sending, by a first access network device, capability information of the terminal to the network device, the receiving unit is further configured to:
receive a third message from the network device, wherein the third message is used to request to obtain the capability information of the terminal.

22. The communication apparatus according to any one of claims 14 to 21, wherein a first access network device comprises a central unit CU and a distributed unit DU, wherein
a sending unit in the CU is configured to send the application layer measurement configuration information to the terminal;
a receiving unit in the CU is configured to receive the application layer measurement report from the terminal; and
the sending unit in the CU is further configured to send the application layer measurement report of the terminal to the DU.

23. A communication apparatus, comprising:
a receiving unit, configured to receive first application layer measurement configuration information from a network device, wherein the first application layer measurement configuration information comprises identification information and a service type, and the identification information indicates a network slice; and
a sending unit, configured to send second application layer measurement configuration information to a terminal, wherein the second application layer measurement configuration information indicates the terminal to perform quality of experience measurement collection on the service type, wherein
the receiving unit is further configured to receive an application layer measurement report from the terminal, wherein the application layer measurement report comprises a result of performing application layer measurement by the terminal on the service type.

24. A communication apparatus, comprising:
a receiving unit, configured to receive application layer measurement configuration information from a first access network device, wherein the application layer measurement configuration information comprises identification information, and the identification information indicates a network slice; and
a sending unit, configured to send an application layer measurement report to the first access network device, wherein the application layer measurement report comprises an application layer measurement result of the network slice.

25. A communication apparatus, comprising:
a processing unit, configured to determine a first message, wherein the first message comprises application layer measurement configuration information; and
a sending unit, configured to send the first message to a first access network device.

26. A communication apparatus, comprising:
a processing unit, configured to determine first application layer measurement configuration information, wherein the first application layer measurement configuration information comprises identification information and a service type, and the identification information indicates a network slice; and
a sending unit, configured to send the first application layer measurement configuration information to a first access network device.

27. A communication apparatus, wherein the communication apparatus comprises a processor and a memory, the memory is configured to store a computer program, and the processor is configured to execute the computer program stored in the memory, so that the apparatus performs the communication method according to any one of claims 1 to 9, claim 10, claim 11, claim 12, or claim 13.

28. A communication system, comprising the communication apparatus according to any one of claims 14 to 22 and the communication apparatus according to claim 24; the communication apparatus according to any one of claims 14 to 22, the communication apparatus according to claim 23, and the communication apparatus according to claim 24; or the communication apparatus according to claim 24 and the communication apparatus according to claim 26.

29. A computer-readable storage medium, wherein the computer-readable storage medium stores a computer program; and when the computer program is executed by a computer, the computer is enabled to perform the method according to any one of claims 1 to 9, claim 10, claim 11, claim 12, or claim 13.

30. A computer program product, wherein the computer program product stores a computer program; and when the computer program is executed by a computer, the computer is enabled to perform the method according to any one of claims 1 to 9, claim 10, claim 11, claim 12, or claim 13.
